# EUROPEAN PATENT APPLICATION

(11) **EP 4 768 532 A1**
(43) Date of publication of application: **01.07.2026**
(21) Application number: 24223421.9
(22) Date of filing: 27.12.2024
(51) Int. Cl.: C08L 7/00, C08L 97/00

(54) **SPORT FLOOR COMPONENT COMPRISING RUBBER AND LIGNIN**

(71) Applicant: Melos GmbH, 49324 Melle (DE)
(72) Inventor: SALLAT, ALADDIN, 49326 Melle (DE); TEBBEN, MAIKE, 31675 Bückeburg (DE); SICK, Stephan, 76534 Baden-Baden (DE); GROCHLA, Dario, 44869 Bochum (DE)
(74) Representative: Richardt Patentanwälte PartG mbB

(57) **Abstract**

Disclosed herein is a sports floor component (200, 402, 404) comprising cross-linked rubber, and further comprising lignin (700, 904, 1104, 1112).

## Description

### FIELD OF THE INVENTION

The invention relates to the field sport floors and components thereof.

### BACKGROUND

The use of synthetic materials in sports flooring systems, including artificial grass infill, running tracks, and shock pads, has become widespread due to their performance characteristics, durability, and ability to meet the demands of modern sports and recreational activities. However, these materials are predominantly manufactured from non-renewable, petrochemical-based resources such as polyurethane, polyethylene, EPDM (ethylene propylene diene monomer rubber), and styrene-butadiene rubber (SBR). The reliance on such petro-based materials poses significant environmental and sustainability challenges.

A key challenge with these components is their lifecycle reliance on finite fossil resources. A further challenge is that these components are often difficult to recycle due to the use of nondegradable plastic material. Therefore, old sports floor components often end up in landfills or are incinerated. If the incineration conditions are not chosen properly, harmful pollutants may potentially be released.

A further problem may be caused by displaced microplastics and granules which accumulate in nearby soil, waterways, and drainage systems: During their operational life, sports floor components such as artificial grass infill and running tracks are exposed to mechanical wear, weathering, and ultraviolet (UV) degradation. These processes result in material fragmentation, leading to the release of particles into the environment and contributing to a shortened lifespan of the components.

Many sports floor components comprise fillers. Fillers are substances or substance mixtures added to sports floor materials to enhance their physical, mechanical, and economic properties. By partially replacing more expensive base materials (e.g., polymers), fillers may reduce production costs without significantly compromising performance.

Commonly, mineral-based materials are used as fillers. Typically, the type of filler to be used is selected predominantly or exclusively based on properties inherent to the filler itself, such as its price and mechanical properties.

### SUMMARY OF THE INVENTION

It is an objective to provide for an improved sports floor component and method for manufacturing the same. The objectives underlying the invention are solved by the features of the independent claims.

In one aspect disclosed herein is a method of manufacturing a sports floor component. The method comprises mixing rubber and lignin to provide a rubber composition; and curing the rubber composition to form a matrix of cross-linked rubber molecules incorporating the lignin.

In a further aspect, described herein is a sports floor component comprising cross-linked rubber, and further comprising lignin.

It is understood that one or more of the examples described herein may be combined as long as the combined examples are not mutually exclusive.

### BRIEF DESCRIPTION OF THE DRAWINGS

In the following, examples are described in greater detail making reference to the drawings in which:
Fig. 1 is a flow chart of a method of manufacturing a sports floor component involving the creation of reversible cross-links;
Fig. 2 illustrates a sports floor component in the form of infill;
Fig. 3 illustrates artificial turf comprising the infill;
Fig. 4 illustrates a sports floor component configured as a support layer within a sports floor system;
Fig. 5 illustrates a sports floor in the form of a running track;
Fig. 6 illustrates a sports floor in the form of a shock pad;
Fig. 7 illustrates the structure of lignin from a softwood;
Fig. 8 illustrates the epoxidation reaction of natural rubber;
Fig. 9 illustrates a matrix of covalently cross-linked rubber molecules;
Fig. 10 illustrates a matrix of covalently cross-linked rubber molecules also cross-linked with lignin molecules;
Fig. 11 illustrates a high temperature dynamic heat treatment (HTDHT) procedure applied on an ENR-lignin mixture;
Fig. 12 illustrates reversible ionic cross-links catalysed by dimethylimidazole;
Fig. 13 illustrates ester bonds cross-links between ENR molecules and a carboxylic acid molecule;
Fig. 14 is an illustration of a further type of reversible ionic ENR molecule cross-linking; and
Fig. 15 is a flow chart of a method of manufacturing a sports floor component involving the creation of irreversible cross-links in a vulcanisation reaction.

### DETAILED DESCRIPTION

Manufacturing and using a sports floor component comprising cross-linked rubber and lignin offers significant technical and environmental benefits:

Traditionally, fillers have been selected primarily or exclusively based on their inherent properties, such as cost, mechanical strength, and similar factors. It was generally assumed that the properties of the sports floor component would result from a straightforward linear extrapolation of the properties of the filler and other ingredients, weighted by their relative proportions. However, the inventors have observed that in the context of rubber-based sports-floor components, the use of lignin as a filler provides significant and synergistically enhanced benefits.

The mechanical properties of lignin and rubber have been observed by the inventor to be complementary, making it possible to create sports floor components that combine the favorable properties of both materials in a balanced manner. Lignin is a rigid, amorphous biopolymer known for its high stiffness and rigidity, which allows it to provide structural support. However, lignin lacks elasticity and is prone to fracturing under tensile stress. In contrast, rubber is a highly flexible, elastomeric polymer with a high molecular weight. It can undergo significant deformation under stress and return to its original shape, absorbing energy effectively, which makes it resistant to impact and wear.

By combining rubber with lignin, a sports floor component can be created that is both elastic and flexible while also being sufficiently stiff. Lignin acts as a reinforcing filler within the rubber matrix, enhancing stiffness and mechanical strength without substantially compromising elasticity. At the same time, rubber's elasticity offsets lignin's brittleness, resulting in a composite material with improved impact resistance and a reduced tendency to fracture.

Second, sports floor components made from a combination of rubber and lignin offer enhanced environmental sustainability. Lignin, being biobased and biodegradable, is a by-product of the pulp and paper industry, making it an economical and eco-friendly additive for rubber-based products. Often, it offers a sustainable way to upcycle industrial waste. The lignin used as filler can also be produced from wood directly as a wood-based filler. Hence, lignin is a biobased and biodegradable substance. By incorporating lignin into rubber, it is possible to create sports floor components that are at least partially biodegradable. If the rubber used is natural rubber and the cross-linking involves a reversible reaction, the rubber component itself may also be biodegradable. This approach helps to prevent the formation of microplastics and significantly reduces the amount of plastic waste ending up in landfills.

The inventor also observed that a combination of rubber and lignin exhibits significantly improved thermal and UV stability compared to rubber alone. Lignin demonstrates excellent heat resistance, decomposing at higher temperatures than rubber, and enhances the UV resistance of the rubber-lignin composition, thereby improving its durability and dimensional stability in outdoor or high-temperature applications. Additionally, lignin enhances the robustness of rubber against oxidative stress, UV light, and ozone.

This effect may be particularly beneficial when natural rubber or epoxidized natural rubber is used as the rubber component. Due to its unsaturated double bonds, natural rubber, and, to a lesser degree, also epoxidized natural rubber, is more susceptible to UV light and oxidative stress compared to many petroleum-based and highly saturated rubber types. Incorporating lignin helps mitigate these weaknesses, resulting in a more durable and stable composite material. Hence, the incorporation of lignin compensates for the inherent susceptibility of natural rubber to degradation caused by sunlight, oxidative stress (e.g., ozone, free radicals), and other environmental factors, thereby significantly extending the material's lifespan.

The inventors have observed that the beneficial effects are particularly prevalent when rubber is reversibly or irreversibly cross-linked in a curing process under the presence of lignin. Without the wish to be bound by any theory, the inventors assume that when rubber is reversibly and/or irreversibly cross-linked, also reversible cross-links, in particular ionic bonds, between rubber and lignin molecules are generated.

The sports floor component may be designed for either indoor or outdoor applications. The combination of rubber with lignin is particularly advantageous for outdoor use, as it offers enhanced robustness against elevated UV exposure, temperature fluctuations, and oxidation-induced stress. This improved durability makes it especially suitable for environments subject to harsh weather conditions and prolonged sunlight exposure.

The use of lignin as a filler is particularly advantageous when the artificial sports floor component is artificial grass infill, and a natural look and feel for the grass is desired. Lignin's dark brown color closely resembles soil, allowing the infill to replicate a natural appearance. However, for colored sports surfaces or sports floor components that remain visible, the lignin may optionally be combined with a further, lighter filler, such as chalk, is preferably used to achieve the desired aesthetic.

According to embodiments, the lignin is selected from a group consisting of Kraft lignin, Magnesium Lignin and Sodium Lignin. Preferably, the lignin is Kraft lignin.

Lignins are complex, three-dimensional polymers produced by vascular plants and play a key role in providing structural integrity to plant fibers.

Kraft Lignin is a type of lignin that is derived from wood pulp processes, specifically the kraft process. It is a significant industrial lignin type available in large quantities. Kraft lignin typically exhibits a glass transition temperature (Tg) around 153°C and has a relatively low molecular weight (typically below 4000 Da, e.g., 2300 Da).

Magnesium Lignin (Mg-Lignin) is the magnesium salt of lignosulfonic acid, which is more basic in nature. It has a higher molecular weight (e.g., 6200 Da) and a lower Tg (-26°C) compared to kraft lignin.

Sodium Lignin (Na-Lignin) is a sodium salt of lignosulfonic acid. Its molecular weight is also higher (e.g., 7000 Da), and it shows a Tg of about -27°C, indicating a more flexible structure at lower temperatures.

The inventors have observed that kraft lignin shows superior reinforcing capabilities compared to the other two lignin types, in particular when the curing step involves a sulphur-based vulcanization. Without the wish to be bound by any theory, Kraft lignin is assumed to show the best performance due to its basic nature, enhancing the sulphur cross-linking reaction compared to the acidic Mg- and Na-lignin.

Furthermore, the kraft pulping process introduces a higher concentration of phenolic hydroxyl groups in lignin compared to other lignin extraction methods. These groups form hydrogen bonds with the rubber matrix, improving the interfacial adhesion and stress transfer between lignin and the rubber.

According to some embodiments, the sports floor component comprising lignin does not require additional UV-protectant additives and/or anti-ozone agent additives, and therefore may be free of UV-protectant additives and/or anti-ozone agent additives. Lignin inherently enhances the stability of rubber under thermal oxidative aging, making the use of additional UV-protectants and antioxidants unnecessary in many cases.

The lignin is added, for example, as a filler to the rubber composition, i.e., in an amount of at least 5%. In particular, lignin may be comprised in the rubber composition and in the sport floor component manufactured therefrom in an amount of 50-70% by weight the rubber composition/ the sport floor component. In some examples, the weight ratio of lignin:rubber in the sports floor component may be in the range of 100:100 to 220:100.

The rubber can be, for example, petro-based rubber, natural rubber ("NR"), epoxidized natural rubber ("ENR"), or a mixture thereof.

### Method involving reversible cross-linking

According to embodiments, the rubber is epoxidized natural rubber and the mixing comprises mixing the rubber and the lignin with imidazole or an imidazole derivate. The rubber composition is cured such that the matrix comprises reversible cross-links between different ENR molecules and between ENR and lignin molecules.

Using a filler that may be able to form some ionic or covalent cross-links with the ENR molecules may have the advantage of providing additional strength to the material without cancelling out the desirable effects (control of degradation and material flexibility by actively destabilizing the reversible cross-links) provided by the reversible cross-links. Hence, instead of vulcanizing the ENR to increase its mechanical strength and robustness, a filler that serves as reinforcing agent and that in addition may be able to form some cross-links with the ENR was observed to be a good compromise between structural robustness and integrity on the one hand and the desirable flexibility with respect to degradation speed and material rigidity provided by the reversible cross-links.

The imidazole or imidazole derivate may act as an epoxide-ring-opening agent which will react with the epoxide groups of ENR to form a modified ENR molecules comprising a plurality of imidazole (or imidazole derivative) groups at the former epoxide sites. These imidazole (or imidazole derivative) groups are positively charged and will form reversible, ionic bonds with negatively charged groups of other ENR molecules (e.g., OH groups), or with other substances (e.g. polyfunctional carboxylic acids), thereby indirectly reversibly cross-linking different imidazolized ENR molecules via the other negatively charged substances.

In addition, imidazole (or the imidazole derivative) may act as a catalyst to facilitate the reaction of other substances (e.g. polyfunctional carboxylic acids acting as cross-linkers) with the epoxide sites of the ENR, thereby forming covalent cross-links, in particular ester bonds, between different ENR molecules. Hence, by combining the imidazole or imidazole derivate with additional substances such as polyfunctional carboxylic acids, it is possible to create covalent cross-links between different ENR molecules in addition to direct and indirect reversible ionic cross-links between different ENR molecules.

The imidazole-mediated, reversible cross-linking of ENR may be particularly advantageous, because the reversible cross-links will enhance elasticity, durability, and resistance to wear during the usage time of the sports floor component, making it highly suitable for high-performance sports applications. At the same time, the reversible cross-links allow for an accelerated degradation at the end-of-life of the sports floor component as they are less stable than covalent bonds and may allow to induce breakage of the reversible cross-links in a controlled manner. In many cases, the reversible cross-links may allow, at the end-of-life of the sports floor, to induce or boost the degradation and/or composting of the rubber network by heating the used sports floor component, thereby destroying the reversible cross-links. In some cases, where the sports-floor is completely made of biodegradable material, this may significantly reduce the time until the sports-floor component has completely degraded. In other cases, where the sports-floor is a composite or combination of biodegradable and non-biodegradable components, at least the biodegradable components will degrade quickly and in a controlled manner, thereby reducing the total volume of plastic waste that ends up in a land fill, that is incinerated or that needs to be recycled. The biodegradable components may be turned into humus and used as fertilizer or soil additive.

In general, NR has a higher tensile strength, and higher "green strength" than many petro-based rubbers such as EPDM (NR shows additionally a so called "strain induced crystallization"). The term "green strength" refers to the strength and cohesiveness of unvulcanized rubber. It describes the rubber's ability to resist deformation, tearing, or breaking during processing and handling. NR, and also ENR, inherently has high green strength due to its unique molecular structure, which includes long polymer chains with a high degree of entanglement. By introducing reversible cross-links as described herein, the green strength and tensile strength may further be increased without making the resulting ENR network too rigid or inflexible.

Hence, the use of reversibly cross-linked ENR may overcome the disadvantage of natural rubber compared to petro-based rubber: petro-based rubber such as EPDM is often saturated and engineered with only a few reactive sites and hence shows a higher UV resistance, radical resistance and oxidation resistance than natural rubber. The backbone of natural rubber is made of Cis-1,4-polyisoprene comprising many unsaturated and highly reactive bonds which are prone to light-induced decay and oxidation. By reversibly cross-linking the ENR via imidazole and/or imidazole derivates, these disadvantages of natural rubber may be reduced or overcome. Hence, a bio-based, renewable, and more easily degradable alternative to petro-based sport flooring components is provided which shows a similar robustness against UV light, ozone, radicals and oxidative stress like highly saturated petro-based components. The resulting ENR-based sports floor component may also allow to temporarily destabilize or break the reversible cross-links, e.g. during installation, repair or de-installation, thereby temporarily increasing the flexibility of the material which may ease the handling of the material.

Preferably, the ENR is not cured via a sulphur based or a sulphur-peroxide system, because the irreversible cross-links introduced during conventional vulcanization would inhibit or cancel out the reversible, dynamic characteristics provided by the reversible, ionic imidazole-mediated cross-linking of ENR molecules.

The imidazole derivate can be, for example, an alkyl-substituted derivate of imidazole, in particular a dialkyl-substituted derivate of imidazole. For example, the alkyl may have a chain length shorter than 5 carbon atoms.

The inventors have observed that imidazole derivatives with only short side chains, or none at all, exhibit improved reactivity. This is likely due to enhanced accessibility to the epoxide groups of the ENR, as the absence or reduction of longer side chains minimizes steric hindrance. According to other embodiments, the imidazole derivate is butyl-imidazole. In some embodiments, mixtures of imidazole and imidazole derivates or of different imidazole derivates may be used.

According to preferred embodiments, the imidazole derivate is a dimethyl-substituted derivative of imidazole, in particular 1,2-dimethyl imidazole.

The use of 1,2-dimethyl imidazole (or "DMI" in the following) was observed to provide a particularly high reactivity and a high rate of reversible cross-linking of different ENR molecules when the DMI was combined with one or more carboxylic acids. Hence, according to embodiments, a reaction mixture is prepared that comprises at least ENR, a filler, DMI and one or more carboxylic acids.

A high cross-linking rate (also referred to as "conversion rate"), i.e., the formation of a large number of cross-links per time during the curing process, is important, because the curing process requires high temperatures. An extended curing time has been observed to weaken the cured ENR network's ultimate mechanical characteristics. The cross-linking rate is a crucial factor that influences the processing time and overall efficiency of material production.

In reaction mixtures not comprising a polyfunctional carbonic acid, imidazole was observed to be a stronger enhancer of reversible ENR cross-linking than DMI. However, DMI was observed to strongly enhance the cross-linking rate and efficiency in the presence of polyfunctional carboxylic acids, in particular of carboxylic acids having chain lengths between C4-C12. When combined with polyfunctional carboxylic acids, DMI often showed an improved effectiveness in ENR cross-linking than imidazole.

The term "cross-linking efficiency" denotes the effectiveness of the cross-linking process, usually defined as the number of cross-links formed per unit of cross-linking agent consumed. It is calculated by comparing the actual number of chemical cross-links produced to the theoretical maximum possible given the amount of cross-linking agent used. Hence, while the cross-linking rate is about the speed and kinetics of the cross-linking process, the cross-linking efficiency is about how well the cross-linking agent (imidazole or imidazole derivate, optionally also a polyfunctional carboxylic acid) is utilized to form permanent cross-links in the ENR.

Cross-linking rate and efficiency can be evaluated through various means such as rheometric methods or spectroscopic techniques.

That the DMI can show improved cross-linking effectiveness compared to imidazole when combined with polyfunctional carboxylic acids is somewhat surprising, because in imidazole, the highly reactive N-1 position of the 1H-imidazole is not blocked by alkyl groups. The imidazole ring in 1,2-dimethylimidazole is a strong nucleophile, facilitating ring-opening reactions of epoxide groups in ENR. Applicant suspects that the dimethyl substituents at positions 1 and 2 enhance the stability of the imidazolium intermediate formed during the ring-opening reaction, thereby improving the reaction rate and cross-linking efficiency, in particular in combination with carboxylic acids having chain lengths between C4-C12. The small size and low steric hindrance of 1,2-dimethylimidazole may ensure that it can easily access epoxide groups in complex ENR networks. Compared to bulkier ring opening catalysts, DMI reduces the likelihood of unwanted side reactions and undesirable and/or unexpected product properties.

It is assumed that the improved mechanical strength and the increased material flexibility of the cross-linked material upon heat treatment are primarily the result of ionic cross-links and ionic clusters. Substituted imidazoles, such as DMI or butylimidazole, in combination with a polyfunctional carbonic acid, have been observed to be more effective at inducing the formation of these ionic cross-links and clusters compared to imidazole.

According to some examples, the mixing comprises mixing the ENR, the lignin and the imidazole or imidazole derivate with a polyfunctional carboxylic acid.

A "polyfunctional carboxylic acid" as used herein is an organic compound that contains two or more carboxyl groups (-COOH) within its molecular structure. In addition to these carboxyl groups, polyfunctional carboxylic acids may also have other functional groups, such as hydroxyl (*-OH*)*,* keto (-C=O), or amino (-NH2) groups, which can impart additional chemical reactivity and properties.

Adding a polyfunctional carboxylic acid to the ENR-lignin composition may have the advantage of allowing covalent ester bonds to form between the multiple carboxylic groups of the acid with the epoxide groups of different ENR molecules, thereby creating covalent cross-links between different ENR molecules which further enhance the structural robustness of the ENR and its robustness against oxidative stress, free radicals and UV-induced degradation. In addition, the polyfunctional carboxylic acid in combination with the imidazole (or imidazole derivate) may allow the formation of indirect ionic cross-links between different ENR molecules: the positively charged imidazole(derivate) groups of different ENR molecules may form ionic bonds to the (multiple) negatively charged carboxylic groups of the acid, thereby introducing indirect ionic bonds between the different ENR molecules. "Indirect" in this context means that some ionic bonds may be formed not directly between two ENR molecules, but rather between charged groups of the acid and two different ENR molecules such that the ENR molecules are linked indirectly via the acid.

In addition, polyfunctional carboxylic acids may activate the epoxide ring by making the electrophilic carbon more susceptible to nucleophilic attack. They may act as proton donors to the oxygen in the epoxide group, thereby boosting the cross-linking rate achieved by the imidazole (or imidazole derivative) in the ring-opening process. The presence of multiple carboxyl groups ensures that the acid can participate in repeated reactions or simultaneously interact with multiple epoxide groups, increasing the efficiency of the process.

According to preferred examples, the polyfunctional carboxylic acid is a dicarboxylic acid.

For example, the dicarboxylic acid can be dodecanedioic acid, 2,2'-dithiodibenzoic acid (DTBA), oxalic acid, malonic acid, succinic acid, adipic acid, pimelic acid, sebacic acid or glutaric acid.

Using dicarboxylic acids, i.e., a polyfunctional carboxylic acid having exactly two carboxylic groups, may allow avoiding the formation of side chains. As a consequence, the sports floor component may remain more flexible compared to carboxylic acids having a higher number of carboxylic acid groups.

According to some examples, the polyfunctional carboxylic acid has a chain length from 2 to 15 carbon atoms, in particular from 2 to 12 carbon atoms.

According to some examples, the polyfunctional carboxylic acid is selected from a group comprising: oxalic acid, malonic acid, succinic acid, glutaric acid, adipic acid, pimelic acid, sebacic acid, and dodecanedioic acid or sebacic acid.

The compact structure of carboxylic acids having less than 16 amino acids was observed to provide particularly effective cross-linking, presumably because a chain length below 16 reduces steric hindrance, allowing them to closely approach the epoxide groups. This ensures effective interaction and enhances reaction rates compared to longer-chain carboxylic acids, which may be bulkier and less reactive due to steric effects.

According to a preferred example, the polyfunctional carboxylic acid has a chain length of 10 to 12 carbon atoms. In particular, the polyfunctional carboxylic acid is dodecanedioic acid (C12) or sebacic acid (C10). A combination of a polyfunctional carboxylic acid having a backbone of 10 to 12 carbon atoms, in particular dodecanedioic acid, and dimethyl imidazole has been observed to provide a particularly effective way of cross-linking ENR for manufacturing various types of sports floor components.

It was observed that short-chain dicarboxylic acids (of up to five carbon atoms), in the absence of dimethylimidazole or other imidazole derivates, have a higher cross-linking efficiency than long-chain dicarboxylic acid. However, under the presence of an imidazole, and in particular under the presence of dimethylimidazole, long-chain dicarboxylic acids of 9 to 15, in particular 10 to 12 carbon atoms, had the highest cross-linking efficiency.

Without the wish to be bound by any theory, the inventors assume that the synergistic effect in cross-linking rate and/or efficiency observed when combining long-chain acids and dimethyl imidazole can be attributed to the simultaneous formation of dimethyl-imidazolium-ENR from the ENR epoxy groups and the 1,2-dimethyl imidazole, along with hydrogen transfer between the dimethyl imidazolium and the long chain acid. Additionally, the long-chain dicarboxylic acid facilitated catalytic reduction of the reaction barrier during the formation of the dimethyl-imidazolium-ENR.

In sum, the inventors have observed that both the imidazole (or imidazole derivate) and the polyfunctional carboxylic acid can act as both a catalyst and a reactant. After initiating the ring-opening, they may covalently bond to the opened epoxide, contributing to ionically and/or covalently cross-linking in polymer networks. By combining the imidazole (or imidazole derivate) and the polyfunctional carboxylic acid, a particularly effective cross-linking of the ENR can be achieved, whereby the reversible ionic bonds may ensure that the product is still degradable and hence particularly environmentally friendly.

According to a first series of examples, ENR, imidazole and lignin, and optionally also a carboxylic acid, was mixed to provide the reaction mixture in accordance with the following formulations:

| Example # | 1 | 2 | 3 |
|---|---|---|---|
| Acid | Oxalic acid | Dodecane dioic acid | none |
| C-atoms of acid | C2 | C12 | |
| Molecular weight M of acid (g/mol) | 90,03 | 230,30 | |
| amount m of acid (g/100g ENR) | 1,8 | 4,61 | |
| Molar amount acid (mmol) | 20 | 20 | |
| Molar amount of imidazole (mmol) | 20 | 20 | 20 |
| amount of imidazole [68,077 g/mol] (g/100g ENR) | 1,36 | 1,36 | 1,36 |
| Molar ratio imidazol:acid | 1 | 1 | - |
| Amount ENR-50 (g) | 100 | 100 | 100 |
| Filler: lignin (phr) | 40 | 40 | 40 |

In addition, a series of further examples was prepared as follows:

| Example # | 2 | 3 | 4 | 5 | 6 |
|---|---|---|---|---|---|
| Acid | Oxalic acid | Succinic acid | Adipic acid | Sebacic acid | Dodecane dioic acid |
| C-atoms of acid | C2 | C4 | C6 | C8 | C12 |
| Molecular weight M of acid (g/mol) | 90,03 | 118,09 | 146,14 | 202,25 | 230,30 |
| amount m of acid (g/100g ENR) | 1,8 | 2,36 | 2,93 | 4,05 | 4,61 |
| Molar amount acid (mmol) | 20 | 20 | 20 | 20 | 20 |
| Molar amount of DMI (mmol) | 20 | 20 | 20 | 20 | 20 |
| amount of DMI [96.13 g/mol] (g/100g ENR) | 1,92 | 1,92 | 1,92 | 1,92 | 1,92 |
| Molar ratio DMl:acid | 1 | 1 | 1 | 1 | 1 |
| Amount ENR-50 (g) | 100 | 100 | 100 | 100 | 100 |
| Filler: lignin (phr) | 40 | 40 | 40 | 40 | 40 |

Further examples were prepared with different molar ratios of cross-linking agent:acid, and with ENR-25. The mixtures were respectively mixed at 120 °C until all components were homogeneously dispersed and then cured in an autoclave at 160°C.

Then, the mechanical properties of the cross-linked ENR were examined. It was found that in general, imidazole is a more effective cross-linking agent than DMI, but if combined with a polyfunctional carbon acid, DMI was able to outperform imidazole, in particular when combined with C10 and C12 carboxylic acids. A combination of imidazole or an imidazole derivate, in particular DMI, could significantly improve the mechanical properties of cured ENR. Surprisingly, this effect was even higher for carboxylic acids having a C10 or C12 backbone than for carboxylic acids having a backbone of less than 10 carbon atoms, despite both lower reactivity and inhibition of curing reactions of the long-chain dicarboxylic acids. The inventor believes that the combination of a long-chain (C10-C12) polyfunctional carboxylic acid and DMI provides a synergistic effect by forming additional ionic bonds, resulting in a significant increase in tensile strength of the ENR-lignin composites. In general, the following amount ranges may be used:

According to some examples, 1H-imidazole or DMI is added to the mixture in an amount of 2-10 phr, in particular 4-5 phr (phr: weight parts of 1H-imidazole per 100 weight parts ENR). The polyfunctional carboxylic acid, e.g., Dodecanedioic acid, is added to the mixture in an amount of 4-20 phr, in particular 8-10 phr.

According to one example, DMI is added to the mixture in an amount of 5 phr, and Dodecanedioic acid is added to the mixture in an amount of 10 phr.

The products obtained were all suited for use as a sports floor component, taking into account that different types of sports floor components require different degrees of elasticity, mechanical rigidity and robustness.

According to some examples, the polyfunctional carboxylic acid is a reaction product between an epoxidized vegetable oil and a plant-based polyfunctional carboxylic acid.

The epoxidized vegetable oil can be, for example, an epoxidized derivative of a vegetable oil selected from a group comprising: soybean oil, linseed oil, palm oil, com oil, cottonseed oil, castor oil, canola oil, rapeseed oil, tung oil, grape seed oil, peanut oil, poppy seed oil, epoxidized tongue oil, sunflower oil, safflower oil, wheat germ oil, walnut oil. In addition, or alternatively, the plant-based polyfunctional carboxylic acid is selected from a group comprising: citric acid, oxalic acid, glutaric acid, tartaric acid, succinic acid, adipic acid, malic acid, maleic acid, and fumaric acid. It is also possible to combine two or more of the above-mentioned epoxidized vegetable oils and/or to combine two or more of the above-mentioned acids.

The reaction product between the polyfunctional carboxylic acid and an epoxidized triglyceride is itself also a polyfunctional carboxylic acid, with a particularly high molecular weight (depending on the molecular weight of the carboxylic acid used as educt). The said reaction product will induce cross-linking via β-hydroxyester linkages between said reaction product and ENR molecules. Without the wish to be bound by any theory, these β-hydroxyester linkages are assumed to be reversible covalent bonds many of which will break upon heat treatment.

For example, the reaction product between the polyfunctional carboxylic acid and an epoxidized triglyceride can be made by dissolving 18 parts of citric acid in 54 parts of warm isopropanol. To this solution, 12 parts of epoxidized soybean oil were added. The isopropanol is evaporated with continuous heating and stirring (at about 87 °C). This process yielded a viscous liquid that was heated to above 120 °C to allow the epoxidized soybean oil and the citric acid to react into a high-molecular polyfunctional carboxylic acid. The reaction product was allowed to cool below 80 °C.

According to another example, 60 parts of citric acid were dissolved into 120 parts of warm isopropanol. To this solution, 40 parts of epoxidized soybean oil were added while stirring. The isopropanol was evaporated with continuous heating and stirring (above 85 °C., and preferably above 100 °C) and the citric acid and the epoxidized soybean oil were allowed to react into a high-molecular polyfunctional carboxylic acid. The reaction product was allowed to cool below 80 °C.

These examples may have the advantage of using a polyfunctional carboxylic acid which may be biobased and which may also be biodegradable. Furthermore, due to the high molecular weight of the reaction product, it will not migrate out of the sports floor component even in case no or only a few cross-links should be formed between the high-molecular polyfunctional carboxylic acid and the ENR matrix.

According to some examples, the imidazole or imidazole derivate, IMI, and the polyfunctional carboxylic acid, A, are mixed in a molar ratio IMI:A of < 1.5:1.0,in particular of <1.2:1.0, in particular of ≤ 1.0:1.0, in particular a molar ratio IMI:A of 1:3 to 2:3, in particular in a molar ratio of 0.4:1.0 to 0.6:1.0.

The polyfunctional carboxylic acid A may in particular be a dicarboxylic acid. The IMI may in particular be, for example, 1,2-dimethyl imidazole.

The inventors have surprisingly observed that the above-mentioned molar ratio provides for a particularly effective cross-linking process with a large number of cross-links formed between different ENR molecules. This observation is surprising, because given the two or more carboxylic groups per acid molecule, one would expect that a molar ratio IMI:A of 2:1 would be optimal for dicarboxylic acids to provide a similar number of positively and negatively charged groups. However, the inventors surprisingly observed that this is not the case, and that a molar ratio IMI:A of the above-specified ranges provides good or even optimal conditions for cross-linking. Without the intention to be bound by any theory, applicant assumes that in examples where both IMI and A are combined to induce ENR cross-linking, the amount of A is the limiting part for the synergistic effect of the IMI-A combination, possibly because of A being less mobile or for other reasons less capable of taking part in the reaction as catalyst or reactant than IMI.

According to some examples, the mixing comprises mixing the ENR, the lignin and the imidazole or imidazole derivate with one or more additives selected from the group comprising UV-protectants, antioxidants, and anti-ozone agents or combinations thereof.

According to some examples, the mixing is performed at a temperature above 100 °C, in particular at a temperature of 100 °C to 140 °C, in particular at a temperature of 100 °C to 120 °C.

Preferably, the mixing is performed in an internal mixer. The mixing step may also be referred to as "compounding". During compounding, the ENR is mixed with the filler and various additives to create a rubber compound, also referred to as rubber composition, tailored for specific applications.

The mixture comprising ENR, lignin, the imidazole (or an imidazole derivative), and the optional polyfunctional carboxylic acid may, for instance, be a solid mixture. This is feasible because ENR, imidazole, and many polyfunctional carboxylic acids are commercially available in solid forms, such as powders or particulate matter. Preferably, a gentle mixing speed that avoids high shear forces is applied. For example, the mixing speed may be 30-50 rpm (rotations per minute) for 5 min or longer until all components are homogeneously dispersed.

After the mixture is homogeneously mixed, the mixture is cured.

The curing may be performed at a temperature of 150 °C or higher, in particular at temperatures of 150 °C-200 °C, in particular of 150°C-180 °C, e.g., at 170 °C.

A "curing agent" as used herein is a substance (e.g., sulphur, peroxides, or accelerators) that promotes cross-linking in polymers. A "vulcanization agent" is a curing agent used in the vulcanization of rubbers, focusing on the production of sulphur cross-links. Hence, vulcanization is a form of curing that involves the creation of irreversible covalent cross-links.

The term "curing" in general refers to a chemical process comprising the formation of cross-links in polymers, here rubber molecules. The process typically involves heating the rubber, wherein the rubber may comprise curing agents which induce and/or accelerate the cross-linking. In the context of the reversible cross-linking of ENR molecules, the term "curing" refers to the chemical process in which epoxide groups in ENR molecules are opened and form reversible and/or irreversible cross-links with other ENR molecules. The ring opening and cross-linking reaction may be catalysed by a curing agent (such as imidazole or its derivatives and optionally also a polyfunctional carboxylic acid) which may also take part in the cross-linking reaction as reactant.

The curing can be performed, for example, in an extruder, in a heated mold, a heated press, or in an autoclave.

According to preferred examples, the curing is performed in an autoclave. In this case, the curing temperature may be lower, e.g., the curing may be performed at a temperature of 150°C-180 °C, in particular of 160 °C-170 °C.

According to some examples, the rubber is ENR and wherein the ENR has a mole degree of epoxidation of between 20% and 60%, in particular between 40% and 60%.

For example, different grades of ENR having a different extent of modification are currently available, such as ENR 25 (25 mole% epoxide) and ENR 50 (50 mole% epoxide).

According to some examples, the lignin is added as a first filler and the mixing comprises adding to the rubber composition a second filler selected from a group comprising: an inorganic filler, in particular an inorganic filler selected from a group comprising: Chalk; Silica (Quartz Sand); Calcium Silicate; Barium Sulfate; Clay or Kaolin; Aluminum Hydroxide; Magnesium Hydroxide; Zinc Oxide; Fly Ash; Talc; Wollastonite; Perlite; or a recycled, plastic-based filler, or an organic filler, in particular Carbon Black.

In some examples, the filler is or comprises silanized lignin covalently cross-linked to the rubber molecules.

According to some examples, the method for manufacturing the sports floor component (via imidazole or imidazole derivate mediated or via a vulcanisation mediated cross-linking) further comprises: silanising the lignin or a combination of lignin and silica using a silane coupling agent under the presence of the rubber such that covalent cross-links between the filler and the rubber molecules are formed.

The covalent coupling of the silanized lignin to the rubber is preferably performed before a curing agent is added to the mixture or, under the presence of a curing agent, while the curing is performed. Depending on the type of curing reaction used, the curing agent is imidazole, an imidazole derivate, or a vulcanization agent.

According to some examples, the method for covalently coupling silanized lignin with the rubber backbone is performed as described below. In case the filler comprises a mixture of lignin and silica, this mixture is comprised in the silanization reaction mixture. The method may comprise the following steps:

In a first step, the filler (lignin optionally in addition silica) is mixed with the rubber. This can be performed using equipment such as an internal mixer with a rotor and heating system or the mixing unit of an extruder. Once the filler and rubber are thoroughly combined, the temperature of the mixture is gradually increased to 50-120°C while maintaining continuous mixing.

Next, silane coupling agents are added to the mixture, and mixing is continued at elevated temperatures, typically ranging from 80°C to 180°C, depending on the specific type of silane coupling agent used. During this stage, the silanization process occurs, involving the following chemical reactions that proceed simultaneously within the silanization reaction mixture:

Silane hydrolysis: The silane coupling agents are brought in contact with water or with moisture to induce hydrolysis of the silane comprised in the silane coupling agents. Typically, the atmospheric humidity or the moisture comprised in the filler is sufficient. Thereby a silanole (a molecule having a Si-OH group) is created. For example, the hydrolysis may involve the following reaction: R-Si-(O-R)3 + 3 H2O → R-Si-(OH)3 + 3RHO.

Condensation with the filler: In this step, the silanoles obtained in the hydrolysis react with the hydroxyl groups on the filler surface. Stable siloxane bonds are formed. The siloxane bonds anchoring the silane to the filler.

Coupling step (Attachment to the rubber): In this step, the organofunctional group of the silane coupled to the lignin (and to the silica, if any) may react with double bonds or other reactive sites of the rubber, thereby forming a covalent cross-links between the lignin and the rubber molecules. The rubber may be petro-based rubber, NR or ENR, but in the context of the imidazole-mediated cross-linking, the rubber is ENR.

In the coupling step, preferably no imidazole or other curing agent is present. Executing the coupling reaction of the silanization before the actual curing is performed may increase the effectiveness in the subsequent curing phase. However, in some examples, the coupling reaction is executed during the heating phase of the curing process of the rubber matrix in the presence of curatives. The curative may be imidazole or a imidazole derivate, along with an optional acid in the case of the imidazole-mediated reversible cross-linking, or a vulcanization agent in the case of the irreversible cross-linking reaction mediated by a vulcanization agent.

Different types of silane coupling agents may form different types of covalent bonds with the rubber. For example, a vinyl silane can undergo free-radical addition to the ENR's double bonds. A mercapto silane can form bonds via thiol-ene addition, when the mercapto (-SH) group reacts with the rubber double bonds. The reaction conditions will depend on the type of silane coupling agent used. For example, for vinyl silanes, initiators like dicumylperoxide (DCP) or benzoylperoxide are used at 140°C to 180°C. For mercapto silanes, no initiator is required, but the mixture is heated to about 80-120°C. After completion of the silanization, the mixture is cured. According to preferred embodiments, after the silanization has completed, the rubber-silanized-filler mixture is transferred to an autoclave, mixed with a curative agent, and cured.

This may ensure that the filler is immobilized through the establishment of covalent bonds between the filler and the rubber matrix. As a result, higher amounts of filler can be incorporated without the risk of it detaching from the material under heavy wear. This, in turn, enhances the mechanical stability and extends the lifespan of the sports floor component. If significant amounts of filler were to detach from the matrix, the rubber matrix could become mechanically unstable, leading to the formation of cracks. Such cracks could allow water to infiltrate the rubber matrix, accelerating material degradation through processes such as freeze-thaw cycles or by creating a moist environment supportive of microorganism growth.

According to some embodiments, the curing comprises the introduction of imidazole or imidazole derivate mediated reversible cross-links. In other embodiments, the curing comprises the formation of irreversible covalent cross-links based on vulcanization. In this case, instead of an imidazole or imidazole derivate, a vulcanization agent is added before the composition is cured.

Due to its complex structure and high molecular weight, achieving uniform dispersion of lignin in the rubber matrix can be difficult. Improved dispersion can help ensure consistent and uniform mechanical properties throughout all parts of the sports floor component. Lignin is polar, while natural rubber is apolar, resulting in suboptimal interfacial compatibility between these two molecule types. When lignin is mixed with other substances, in particular with substances being less polar than lignin, lignin agglomerates form within these other substances. These agglomerates have only a small contact area with the ENR and thereby inhibit the formation of cross-links between the ENR and the filler.

However, the inventors have observed that interfacial compatibility can be improved by using epoxidized natural rubber (ENR) instead of non-epoxidized natural rubber (NR). The presence of polar epoxy groups (and any optionally grafted polar functional groups) in ENR makes it more polar than NR, enhancing compatibility with lignin.

According to some examples, the method may comprise the following step for improved dispersion of the lignin in the rubber matrix: mixing the ENR and the lignin to form an initial mixture; This initial mixture does not yet comprise the imidazole or imidazole derivate or the polyfunctional carboxylic acid; subjecting the initial mixture for at least 5 minutes at a temperature of 150 °C to 200 °C under continuous mixing to provide a further mixture with increased dispersion of the lignin in the rubber; This process may also be referred to as high temperature dynamic heat treatment (HTDHT) procedure; then, upon having completed HTDHT, the further mixture is allowed to cool to the temperature used during the following mixing step or even lower; then, the imidazole or imidazole derivative and any additional substances, (e.g., additives, polyfunctional carboxylic acid), are added to the further mixture to provide the rubber composition that is then homogeneously mixed as described at temperatures between 100 °C and 140 °C and that is then cured.

Executing the HTDHT procedure on the initial mixture before adding the imidazole or imidazole derivate may have the advantage of providing a more homogeneous and fine-granular dispersion of the lignin in the ENR matrix, thereby increasing the contact interface between the lignin and the ENR. This may ease the creation of cross-links between the lignin and the ENR molecules, thereby fixing the lignin in the elastomeric ENR matrix and preventing the filler from leaving the ENR matrix upon mechanical impact and other stressors.

According to some examples, the method further comprises subjecting the sports-floor component to a temperature of 150 °C to 250 °C to break the reversible cross-links.

For example, this step may be performed during installation, during use, during repair, during de-installation or after de-installation of the sports floor component, depending on the respective purpose of breaking the cross-links.

Ionic cross-links in rubber can be disrupted by subjecting the material to elevated temperatures to provide sufficient energy to overcome the ionic interactions, disrupting the cross-links. The breaking of the reversible cross-links by applying high temperatures which are not reached upon normal use of the sports floor may allow a controlled boosting of degradation, reshaping, or recycling of ionically cross-linked ENR components of a sports floor. It may also allow for temporary softening, which may be advantageous during the installation or de-installation process.

The above-specified controlled weakening or breaking the reversible cross-links allows for the controlled removal of the ENR component from other elements of the sports floor. This can be used for purposes such as controlled accelerated (bio)degradation after reaching end-of-life of the sports floor, for avoiding or reducing the generation of plastic waste. Additionally, disrupting the reversible cross-links by subjecting the sports floor to heat treatment during its use may allow the automated repair of smaller cracks which may meanwhile have formed in the rubber. Temporary disruption can also be employed to tailor mechanical properties, such as flexibility or hardness, for specific applications. For example, during the installation of the sports-floor component into a predefined cavity or depression in the base layer, the already cured and reversibly cross-linked ENR material can be heated using a mobile heating device, such as a portable electric oven or an infrared radiation source. This temporarily increases the flexibility of the material, facilitating a snug fit into the cavity or depression. Upon cooling, the reversible cross-links regenerate automatically, thereby reducing flexibility, increasing the mechanical robustness and hardness, and at the same time ensuring the material retains an excellent, secure fit within the cavity or depression.

### Method using irreversible cross-linking

According to some examples, the curing of the rubber composition is performed such that a matrix of irreversibly cross-linked rubber molecules is formed and incorporates the lignin. For example, the curing can be a vulcanisation reaction.

The irreversible cross-linking of rubber may be advantageous as the covalent cross-linking of rubber enhances its durability and resistance to wear, making it highly suitable for high-performance sports applications. This is particularly relevant for NR and ENR which tend to have a reduced robustness against wear and tear, high temperatures, UV-light and free radicals compared to highly saturated types of petro-based rubber. The backbone of natural rubber is made of Cis-1,4-polyisoprene comprising many unsaturated and highly reactive bonds which are prone to light-induced decay and oxidation. By covalently cross-linking the rubber molecules, in particular NR (or ENR) molecules, these disadvantages of natural rubber can be significantly reduced.

According to embodiments, the covalent cross-links formed in the curing process are irreversible. The covalently cross-linked rubber is irreversibly cross-linked rubber.

The method further comprises adding a vulcanization agent to the rubber-lignin composition to facilitate the formation of cross-links between polyisoprene chains in the rubber.

The vulcanisation agent can be, for example, sulphur. The sulphur may be added in an amount between 0.5% to 3% by weight of the rubber-filler composition.

In addition, the method may comprise adding an accelerator of a vulcanization reaction. The vulcanization accelerator can be, for example, a thiazole, a sulfenamide, a thiuram, or a dithiocarbamate.

According to embodiments, the vulcanization includes heating the rubber to a temperature range of about 140°C to 200°C, and in particular, for most applications, 140°C to 160°C, to initiate cross-linking reactions. For optimized performance, some rubber-filler compositions may allow for temperatures of up to 200° C, e.g., 180 to 200° C. For example, the rubber-lignin composition is an efficient vulcanization system. Efficient vulcanization systems are vulcanization reaction mixtures are vulcanized at higher temperatures (180-200°C). High vulcanization temperatures improve heat-aging resistance and lower compression set. Efficient vulcanization systems utilize higher amounts of accelerators than sulphur. For example, less than 1 part sulphur is mixed with 2.5-3 parts accelerator.

According to some embodiments, the covalently cross-linked rubber is urethane-cross-linked rubber. For example, urethane-cross-linked rubber may be created by adding urethane cross-linking agents to the composition comprising the rubber and the filler. Urethane cross-linking agents are chemical compounds that form covalent bonds between polymer chains through urethane linkages (-NH-CO-O-). Thereby, the mechanical strength, chemical resistance, and thermal stability is increased by creating a three-dimensional polymer network cross-linked via irreversible covalent bonds between different NR (or ENR) molecules. The effects are analogous to the effects provided by sulphur-based vulcanization.

The urethane cross-linking agent is preferably an isocyanate containing reactive -NCO groups. These reactive -NCO groups react with hydroxyl-terminated polymers. The resulting urethane linkages create a network structure that enhances the mechanical properties of rubber. Cross-links can be formed through the reaction between isocyanates and active hydrogen atoms in the rubber or through the formation of urea linkages from reaction with amino compounds. In natural rubber specifically, urethane cross-linking can occur via prepolymers that are incorporated into the rubber matrix during compounding.

The isocyanate can be, for example, a diisocyanate (e.g., toluene diisocyanate (TDI), or methylene diphenyl diisocyanate (MDI)), or a polyisocyanate (e.g., hexamethylene diisocyanate (HDI) trimer). According to other embodiments, urethane prepolymers are used as the urethane cross-linking agent.

Urethane cross-linking of NR (or ENR) may have several notable advantages: Urethane cross-linked NR (or ENR) was observed to exhibit remarkable stability against aging and improved tensile strength and abrasion resistance. It does not revert easily under heat, enhancing its lifespan and performance in demanding applications.

For example, the urethane cross-linking of rubber (petro-based rubber comprising diene double bonds, NR or ENR) can be achieved by creating a rubber composition, also referred to as reaction mixture, that comprises the rubber, an urethane cross-linking agent, and at least one maleimide cross-linking agent. The maleimide cross-linking agent is preferably added to the composition such that the weight ratio of maleimide cross-linking agent to said urethane cross-linking agent is from about 4:1 to about 1:10. The urethane cross-linking agent may be a polyisocyanate or a derivative thereof.

The urethane cross-linking agent according to one embodiment is represented by the formula: R-(-NH-CO-O-N Q O)m in which R can be a hydrocarbon groups having a functionality of at least two, or can be a polyetherglycol group. Q is an aromatic group in the quinonoid configuration, and m is an integer above 1.

For example, the urethane cross-linking agent can be toluene diisocyanate (TDI), methylenebis(phenyl isocyanate) (MDI), hexamethylene diisocyanate (HDI) or isophorone diisocyanate (IPDI).

The maleimide cross-linking agent can be, for example, N,N"-linked bismaleimides joined directly at the nitrogen atoms and N,N"-linked bismaleimides in which the nitrogen atoms are joined to and separated by an intervening divalent radical selected from the group consisting of alkylene, cycloalkylene, oxydimethylene, phenylene, 2,6-dimethylene-4-alkylphenol and sulfonyl chloride.

The maleimide cross-linking agent can be, for example, N,N'-m-phenylene bismaleimide (BMI), N,N'-ethylene bismaleimide, N,N'-hexamethylene bismaleimide, or N,N'-isophorone bismaleimide. Maleimide cross-linking agents may be particularly effective in improving the thermal and oxidative stability of vulcanized rubber.

According to one example, the urethane cross-linking agent is the phenol-blocked monourethane of 2,4-toluene diisocyanate and p-nitroso-m-cresol, and the maleimide cross-linking agent is m-phenylene bismaleimide.

In order to perform the urethane cross-linking, diene-based rubber is mixed with a curing composition which comprises at least one urethane cross-linking agent capable of cross-linking diene-containing rubber and optionally also at least one maleimide cross-linking agent capable of cross-linking diene-containing rubber. The curing composition comprising the two cross-linking agents is incorporated in the rubber at a concentration of from about 0.1 to about 26 phr, in particular 3 to 8 phr, based on the weight of the dry rubber. The composition is heated to cross-linking temperatures.

According to one embodiments, the rubber-filler composition is created such that it comprises 100 parts by weight of dry rubber, about 1 to 20 parts by weight, e.g., 10 parts per weight, of at least one urethane cross-linking agent, and about 0.1 to about 6, in particular 3 parts by weight of a maleimide cross-linking agent.

Once a homogeneous dispersion of the urethane cross-linker in the rubber is reached (at a temperature of about 90°C to about 125°C, a sulphur accelerator may optionally be added to the composition which is a catalyst for the urethane cross-linker. Thereafter, curing at temperatures in a range of about 140°-180°C for about 10-30 minutes is performed.

Executing the vulcanisation under the presence of an urethane cross-linking agent may provide for a particularly strongly covalently and irreversible cross-linking of the NR (or ENR) molecules.

Applicant has observed that introducing urethane-based cross-linking agents can increase fatigue resistance and improve aging performance compared to conventional sulphur systems. This method allows for higher processing temperatures with retained physical properties.

According to some examples, the curing comprises heating the rubber composition to a temperature range of about 140°C to 200°C to initiate vulcanization cross-linking reactions.

According to some examples, the vulcanization agent is sulphur.

The vulcanization agent may be added, for example, in amounts ranging from 0.4 to < 2.0 parts per 100 weight parts of the rubber, phr, in particular 0.4 to 0.8 phr.

According to some examples, the vulcanization agent and the accelerator are added in a weight ratio of the accelerator: vulcanization agent of less than 12.0:1.0, in particular 2.5:1.0 to 12.0:1.0.

### Aspects related both to methods for reversible and irreversible cross-linking

According to some examples, the curing is performed in an autoclave.

In the autoclave, the rubber-lignin composition is exposed to saturated steam under pressure. These conditions induce the formation of the reversible and irreversible cross-links, whereby the saturated steam acts as an inert gas, facilitating better heat transfer and allowing for higher curing temperatures and shorter cure times compared to traditional methods.

The inventors have observed that curing the mixture in an autoclave is particularly advantageous for manufacturing sports floor components, because the shorter cure times and lower temperatures allow reducing the overall heat exposure time to minimize any potential damage to the rubber. This may be of particular relevance for cases where NR or ENR is used. As mentioned above, ENR is more sensitive to heat and other stressors than petro-based rubber like EPDM. The typical pressure for curing ENR in an autoclave is around 0.3 to 0.7 MPa (approximately 43.5 to 101.5 psi).

The curing temperature in the autoclave preferably ranges from 150°C to 180°C, in particular 150°C to 170°C, with cure times varying based on the thickness and type of the rubber composition. For section thicker than 10 mm, preferably a time cycle of 15 to 90 minutes is used. In addition, autoclaves can handle large volumes of the same or different products simultaneously, provided that the curing agents do not interact negatively. This is particularly advantageous for producing large sports floor components or components having complex shapes that may not be suitable for conventional molds.

According to some examples, the mixing of the rubber and lignin comprises: adding one or more additives selected from the group consisting of UV-protectants, antioxidants, and anti-ozone agents to the rubber composition prior to the creation of the covalent cross-links.

This may further increase the robustness of the sports floor component against UV light, heat, oxygen and ozone. The amount of these additives required will be significantly lower compared to rubber compositions containing other types of fillers, due to the protective properties of lignin.

According to some examples, the mixing of the rubber and lignin comprises: mixing the rubber and the lignin comprising lignin-agglomerates to form an initial mixture; subjecting the initial mixture to a high temperature dynamic heat treatment involving mixing the initial mixture for at least 5 minutes at a temperature of 150°C to 200°C to provide a further mixture with increased dispersion of the lignin in the rubber; and using the further mixture as the rubber composition to be cured. For example, in cases where the rubber composition is to be cured based on the formation of reversible cross-links via imidazole, additives such as the imidazole or imidazole derivate and optional additives such as the polyfunctional carboxylic acid, pigments, UV-protectants, etc. may be added before the curing step is performed. In cases where the rubber composition is to be cured based on the formation of irreversible cross-links via vulcanization, additives such as a vulcanization agent and optional additives such as accelerators, pigments, UV-protectants, etc. may be added before the curing step is performed.

A sports floor component comprising cross-linked rubber, and further comprising lignin, is also described herein. This type of sports floor component may be obtained based on different approaches referred to herein as "reversible" and "irreversible" cross-linking. The reversible cross-linking relates to the formation of reversible cross-links induced by the presence of imidazole or an imidazole derivate, while the irreversible cross-linking relates to the formation of irreversible cross-links induced by a vulcanization agent.

### Sports floor components obtained via reversible cross-linking

According to some examples, the cross-linked rubber is reversibly cross-linked epoxidized natural rubber, ENR.

According to preferred embodiments, the sports-floor component is degradable, in particular bio-degradable. The degradability may be controlled and initialized by subjecting the sports floor component to heat treatment.

According to some examples, the ENR is covalently linked to imidazolium groups and the imidazolium groups of some ENR molecules act as cations forming ionic bonds to other ENR molecules.

According to some examples, the ENR is covalently linked to imidazolium groups and the imidazolium groups of different ENR molecules act as cations forming ionic bonds to negative carboxyl groups of a polyfunctional carboxylic acid.

According to this and/or further examples, the ENR is covalently linked to imidazolium groups and the imidazolium groups of different ENR molecules act as cations forming ionic bonds to negative carboxyl groups of a polyfunctional carboxylic acid.

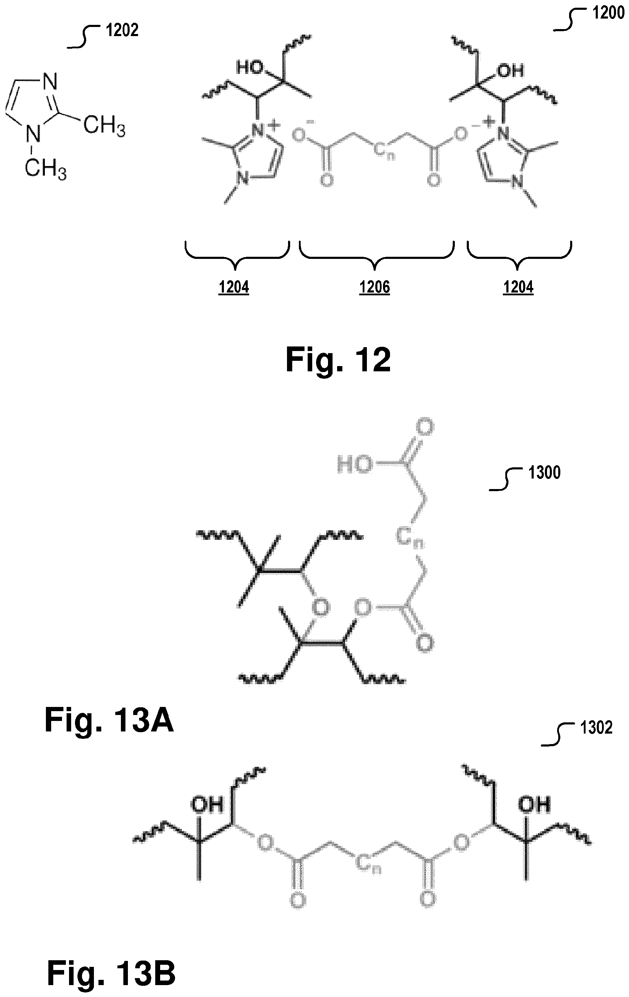

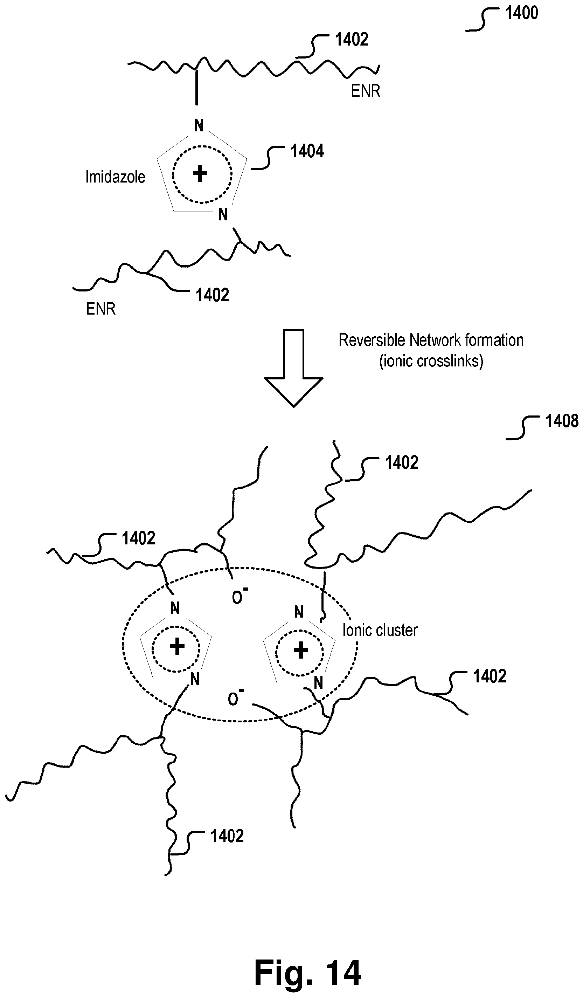

The chemical reaction between the oxirane ring of the ENR molecules and the 1H-imidazole molecule leads to the opening of the oxirane ring and to the formation of a covalent bond between one N-atom of the imidazole and a C-atom of the ENR next to the former oxirane ring. The O-atom of the former oxirane ring will become a hydroxyl group. If the remaining N-atom of the imidazole molecule triggers a ring opening reaction with an oxirane ring of a second ENR molecule, an additional covalent C-N bond will form, thereby covalently connecting two ENR molecules via the imidazole at their former oxirane rings. In addition, ionic pairs and hence reversible cross-links between two or more ENR molecules will form: the oxygen-atom of a former oxirane ring will be negatively charged, while the imidazole ring of a two-fold covalently connected imidazole is positively charged. These charges will cause the formation of reversible cross-links between two or more ENR molecules, wherein the reversible cross-links are in particular ionic bonds and hydrogen bonds. The combination of imidazole-induced, covalent and irreversible cross-links, in combination with the reversible cross-links, has been observed to provide sports floor components with good structural rigidity and robustness to decay, which in addition allow for a controlled induction or acceleration of decay, or for a controlled, temporal increase of structural flexibility. Some examples for different types of cross-links which may form are depicted in figures 13 and 14.

For example, "irreversible cross-links" as used herein refer to bonds that form permanent connections between polymer chains and are created through chemical reactions that cannot be reversed to restore the polymer chains to their original structure and composition. According to some embodiments, the creation of the irreversible bonds between NR chains involves the introduction of covalent ester bonds between ENR molecules and a carboxylic acid. The structure resulting from irreversibly chemically cross-linking the ENR chains may be characterized as a thermoset material that cannot be reprocessed or remelted, contrasting with thermoplastics. The ENR polymer chains obtained by a destruction of these ester bonds would not represent the ENR polymer chains in their original structure and composition. Therefore, these ester bonds are referred to as "irreversible".

In contrast, "reversible" cross-links are chemical connections that can break and reform under certain conditions, and may hence facilitate properties like controlled acceleration of degradation after the end-of-life, and tunable mechanical responses. When a reversible cross-link breaks, the educts having been used for creating the cross-link are regenerated, therefore the cross-link is "reversible". A "reversible cross-link" may also be referred to as "dynamic cross-link" or "dynamic bond". In particular, the formation or breaking of a reversible cross-link may be triggered by a change in one or more environmental parameter values such as temperature or stress. Reversible cross-links can be, for example, non-covalent bonds, like, for example, ionic bonds or hydrogen bonds, and in some cases also covalent bonds formed in specific reactions like Diels-Alder or disulfide exchange reactions. Although hydrogen bonds are often referred to as "interactions" in the literature, they are also classified here as "reversible cross-links." This is because, similar to reversible ionic and covalent cross-links, at least a portion of the hydrogen bonds is mediated by the reactions described herein, such as imidazole- or imidazole-derivative-mediated reactions, optionally under the presence of a polyfunctional carboxylic acid. The reversible covalent bonds formed in these special reactions remain stable for a predefined duration under typical environmental conditions at the use or installation site of the sports floor component. This predefined duration typically corresponds to the typical lifespan of the sports floor component. For instance, the lifespan may be at least 2 years or at least 5 years from the installation date. In some cases, the lifespan may range from 2 to 40 years, commonly between 5 to 20 years, or approximately 10 to 15 years. As an example, reversible covalent cross-links in artificial turf infill or other sports floor components may remain stable for at least 5 years under temperatures ranging from -20°C to +60°C. However, in some cases, the predefined duration may be shorter than the typical lifespan of the sports floor component, e.g. in cases where a predefined rate of decay is desired to allow for a continuous replacement of only parts of the sports floor component. Unlike "irreversible" covalent bonds, "reversible" bonds can be broken under stress conditions that leave the ENR or NR matrix and the lignin largely intact. Such stress conditions may include extended use beyond the predefined duration or exposure to elevated temperatures or other environmental parameters exceeding those typically encountered during the normal use of the sports floor, in particular, controlled heat treatment.

In an imidazole-mediated cross-linking reaction, a mixture of reversible and irreversible ENR-molecule cross-links may be formed. However, in contrast to sports-floor components manufactured in a vulcanization process which generates a large number of irreversible, covalent cross-links, at least a portion of the cross-links generated in an imidazole-mediated cross-linking reaction is reversible, and this portion allows for a controlled induction of degradation of the sports floor component at its end-of-life in response to heat treatment.

According to examples, at least 50% of the cross-links generated during the imidazole-(or imidazole-derivate)mediated cross-linking reaction are reversible, with preferred values being at least 70%, more preferably at least 90%, and most preferably approximately 100%. The inventors have observed that a higher proportion of reversible cross-links enhances the beneficial properties of the resulting sports floor component in terms of biodegradability and/or in terms of minimizing microplastic generation: When the sports floor component is subjected to heat treatment at the end of its life-typically at temperatures between 150°C and 250°C-the reversible cross-links break, converting the reversibly cross-linked portions back into non-cross-linked ENR. This non-cross-linked ENR is biodegradable and does not constitute microplastic. Therefore, increasing the proportion of reversible cross-links directly increases the share of biodegradable material and reduces the potential for microplastic formation.

In preferred embodiments, the use of imidazole-based or imidazole-derivative-based reversible cross-linking enables the sports floor component to be fully transformed into a biodegradable material through heat treatment at the end of its life. Unlike vulcanized rubber, which retains covalent cross-links, the heat-treated ENR from the reversible cross-linking process preferably contains no covalent cross-links and thus does not constitute microplastic.

According to some embodiments, the curing process may comprise creating covalent bonds between the cross-linked rubber and the lignin. For example, the lignin comprises reactive groups allowing for the formation of irreversible covalent bonds between the rubber and silanized lignin molecules as described above. This may be beneficial as the stability and robustness of the rubber matrix with respect to UV and oxidation-induced degradation is further increased.

### Sports floor components obtained via irreversible cross-linking

According to some examples, the cross-linked rubber is irreversibly covalently cross-linked. In particular, the irreversible covalent cross-linking may be the result of a vulcanisation reaction of a rubber-lignin composition comprising a vulcanisation agent. Hence, according to some examples, the cross-linked rubber is vulcanized rubber.

According to embodiments, the sports floor component comprises an accelerator configured to speed up the formation of the covalent cross-links. The accelerator can be, for example, a thiazole, a sulfenamide, a thiuram or a dithiocarbamate.

The cross-linked rubber may form an elastomeric matrix filled with the lignin.

According to some examples, the covalently cross-linked rubber is a covalently cross-linked blend of rubber and a saturated elastomer, wherein the saturated elastomer is in particular EPDM. The use of EPDM as a saturated rubber in the blend may help to increase the weathering resistance of the manufactured sports floor component Applicant has observed that the irreversible cross-linking of the rubber helps to firmly fix the EPDM particles in the rubber matrix.

According to some embodiments, the sports floor component is coated with a waxy barrier layer. For example, the waxy barrier layer can be made of paraffin waxes, in particular fully refined paraffin waxes with a melting point in the range of 50°C to 65°C. Paraffin Waxes are saturated hydrocarbon waxes which have good film-forming properties, and are well suited for providing a protective barrier against ozone and UV.

### Aspects related both to sports floor components obtained via reversible or via irreversible cross-linking

For example, the sports floor component can be an artificial turf infill. According to other examples, the sports floor component can be a component, such as a layer, of a running track or of a tennis court. Likewise, the sports floor component can be a support mat or a shock pad, or a combination of one or more of the aforementioned types of components.

According to some examples, the sports floor component comprises the lignin as a first filler and further comprises a second filler. The second filler can be an inorganic filler, in particular an inorganic filler selected from a group comprising: Chalk; Silica (Quartz Sand); Calcium Silicate; Barium Sulfate; Clay or Kaolin; Aluminum Hydroxide; Magnesium Hydroxide; Zinc Oxide; Fly Ash; Talc; Wollastonite; or Perlite. Alternatively, the second filler may be a recycled, plastic-based filler, or a further organic filler, in particular Carbon Black. The second filler may also be a combination of two or more of the foregoing.

Combining lignin with a further filler may allow customize the properties of the filler, in particular its rigidity and/or weight, to different requirements.

As mentioned above, the rubber may be petro-based rubber, natural rubber or ENR.

ENR is one of the modified rubbers derived from natural rubber. The modification process is done by introducing oxygen atom to the unsaturated molecule of natural rubber. This chemical reaction produces an oxirane or epoxide compound that consists of a three-membered ether in a cyclic form. Various grades of ENR can be used depending on the extent of modification desired. For example, ENR 25 (25 mole% epoxide) and ENR 50 (50 mole% epoxide) are available on the market. ENR is NR that has been chemically modified to include epoxide groups, enhancing its resistance to thermal and oxidative degradation. While ENR offers improved properties compared to untreated natural rubber, it still experiences some aging and degradation over time, primarily driven by similar mechanisms as those affecting conventional natural rubber (ENR, like NR, comprises unsaturated bonds).

The use of ENR in combination with lignin has been observed to be particularly beneficial, because the epoxide groups in ENR make the NR more polar, thereby facilitating interaction and adhesive forces between the rubber matrix and the polar filler lignin.

In order to prevent or reduce the aging induced by heat, UV radiation, ozone, oxidants and high temperatures, various additives may be added to the ENR-filler mixture (e.g., antioxidants, UV-protection agents, anti-ozone agents, etc.).

According to some examples, the sports floor component is coated with a waxy barrier layer. For example, the waxy barrier layer can be made of paraffin waxes, in particular fully refined paraffin waxes with a melting point in the range of 50°C to 65°C. Paraffin waxes are saturated hydrocarbon waxes which have good film-forming properties, and are well suited for providing a protective barrier against ozone and UV.

In other embodiments, natural waxes such as carnauba wax or beeswax are used. These biobased, natural waxes provide eco-friendly alternatives to synthetic options while offering excellent protective properties.

In some examples, the waxy barrier layer is created by applying the wax to the sports floor component as a final manufacturing step. For instance, the wax can be sprayed, painted, or otherwise applied to the surface of the component. Alternatively, the wax may be incorporated into the rubber- lignin composition prior to the introduction of covalent cross-links. In this approach, wax molecules migrate to the surface during use of the sports floor component, forming a waxy protective layer automatically. This method offers the added advantage of a self-renewing protective layer, as new wax molecules migrate to the surface to replace those that are abraded over time, ensuring continuous protection of the sports floor component.

According to embodiments, the sports floor component further comprises one or more additives comprising at least one of: a plasticizer, in particular bio-based oil; a UV-protectant; a thermal stabilizer; an antioxidant; and an anti-ozone agent; and a combination of two or more of these additives. These additives may further increase the robustness of the rubber matrix against decay and a loss of elasticity and structural integrity induced by UV radiation, free radicals, ozone, oxidizing agents and high temperature, thereby increasing the lifespan of the sports floor.

The antioxidant can be, for example, an amine antioxidant, in particular para-phenylenediamine. In addition, or alternatively, the antioxidant is a phenolic antioxidant.

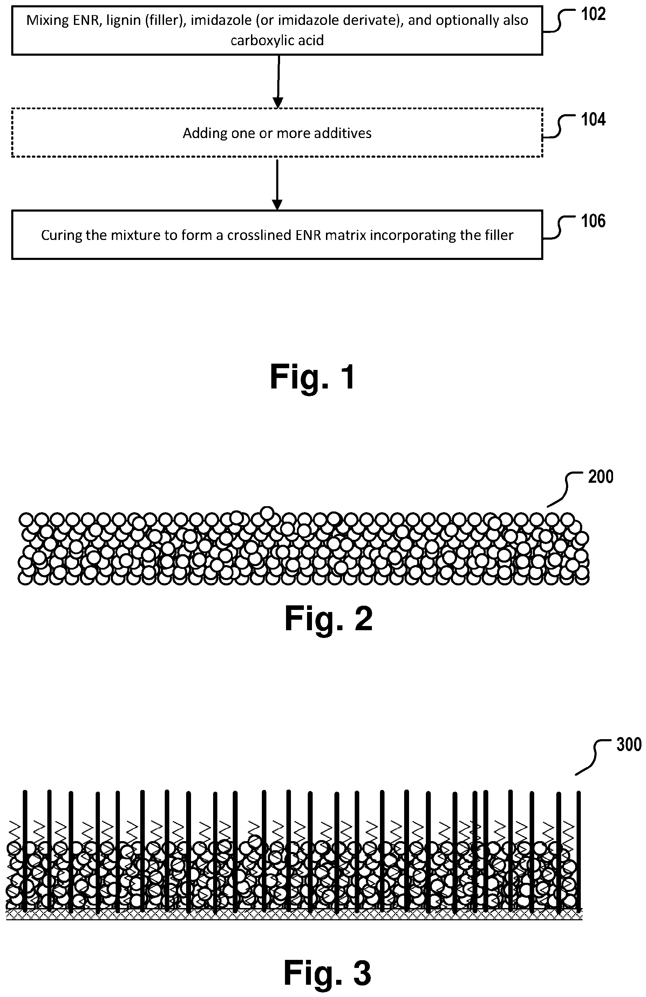

Figure 1 is a flow chart of a method of manufacturing a sports floor component made of ENR matrix comprising the lignin, wherein the formation of the cross-links is induced by imidazole or an imidazole derivate. The ENR molecules in the resulting network are linked via covalent, irreversible cross-links and via reversible cross-links. The reversible cross-links are in particular ionic bonds and hydrogen bonds. The reversible network allows to exert control on the network structure and hence on the material rigidity and susceptibility to decay even after the manufacturing process has been accomplished.

The lignin can be, for example, kraft lignin which is a byproduct of the kraft pulping process. It is a complex, aromatic polymer derived from wood, primarily used in papermaking, and is typically sold as a dry powder, or granules. Optionally, the lignin is combined with a plasticizer, e.g., a mineral oil or, preferably, a plant-based oil, and is then milled. This step may be particularly advantageous when the filler is lignin. The milling of the lignin with the plasticizer may be beneficial because it may ease the dispersion of the lignin in the rubber matrix.

The ENR is commercially available in different degrees of epoxidation. For example, a molar 50% epoxidized rubber may be used. For example, the product Epoxyprene, Muang Mai Guthrie PCL, may be used as the 50% epoxidized rubber.

For example, the mixture may comprise 20-50 % by its weight the ENR, and 50-70% by its weight the filler (predominantly or exclusively lignin). The rest of the mixture may consist of the one or more imidazoles or imidazole derivatives, and optional components such as the polyfunctional carboxylic acid(s) and/or one or more additives. The imidazole(s) or imidazole derivate(s) may be added, according to one example, in an amount of more than 1 phr, e.g., 5 phr to 20 phr, wherein phr refers to weight part per 100 weight parts ENR.

The imidazole component may be a combination of different imidazoles. For example, a combination of 1-butyl-imidazole (IntraChem Limited, also available e.g. from Sigma-Aldrich) and 1H-imidazole (2M-SOLUTION GmbH, also available e.g. from Alfa Aesar) was used in one example. The butyl-imidazole was added in an amount of 4 phr (weight parts per 100 weight parts ENR), and the 1H-imidazole (H) was added in an amount of 6 phr.

Next, in step 102 the lignin, the imidazoles and the ENR were mixed at moderate speed, e.g., 50 rpm rotor speed in a mixer to form a mixture that is also referred to as "rubber composite", "reaction mixture" or "mixture". Optionally, the temperature may be increased moderately, e.g., to a temperature in the range of 25°C to 50°C, to ease the mixing and dispersion of the components. The mixer can be, for example, a two-roll mill or an internal mixer (e.g., Banbury mixer). Preferably, the lignin is added gradually and in powder form into the rubber to ensure uniform dispersion to avoid clumping and ensure effective reinforcement.

In an optional further step 104, one or more polyfunctional carboxylic acids and/or one or more optional additives may be added to the mixture. The steps 102 and 104 may also be executed as a single step, meaning that all components of the mixture may be added simultaneously. The additives may comprise, for example, UV-protection agents, antioxidants, pigments, anti-ozone agents, or combinations thereof. The additives may be incorporated into the mixture while maintaining continuous mixing to ensure uniform dispersion and achieve a homogeneous rubber composition.

In a further, optional step, the mixture may be brought into a desired shape before the mixture has completed curing. For example, the mixture can be passed through a two-roll mill or an extruder to form sheets of desired thickness. For specific applications (e.g., some types of shock pads), the mixture may be molded into shapes using compression or injection molding.

The mixing is preferably executed at a temperature above 100°C, in particular at a temperature of 100°C to 140°C, in particular at a temperature of 100°C to 120°C. In the above-specified example, a temperature of 110°C was used.

Next in step 106, upon having achieved a homogeneous mixing of the components, the mixture may be transferred into a different container or form or device for the curing step. For example, the mixture may be transferred to an autoclave. The mixture is then cured by increasing the temperature of the mixture to a temperature to 150°C or higher, in particular at a temperature of 150°C to 180°C. In the above-specified example, a temperature of 165°C was used. After 5-20 min of curing time, a sports floor component is obtained that comprises an ENR network, wherein at least some of the cross-links of the network are reversible cross-links. The lignin is incorporated in the ENR network. The lignin molecules will also form reversible cross-links with the ENR molecules in the form of hydrogen bonds. In case the lignin was silanized, it may also form covalent bonds with the ENR molecules.

According to some examples, for executing the curing step, the mixture can be placed between heated plates and compressed. The mixture could also be put through an extruder that heats the mixture as it is extruded. In some embodiments, the curing step comprises placing sheets of the mixture or the molded form of the mixture into a heated press. The press is preheated to the required curing temperature (typically 150 °C-180 °C). The mixture is cured by applying heat and optionally slight pressure to the material for a curing time that may depend on the thickness and formulation of the sports floor component.

The reversibly cross-linked mixture is a solid and typically elastic material that is much more robust against UV, oxidative stress or ozone than the ENR before it was subjected to the cross-linking reaction. As lignin is used as filler, the resulting reversibly cross-linked ENR network is also much more robust against the above-mentioned environmental conditions than ENR without a filler or with a filler being not lignin.

In order to complete manufacturing of the sports floor component, additional steps may be executed depending on the type of the component. For example, if the sports floor component to be manufactured is artificial turf infill, the reversibly cross-linked ENR matrix is granulated. For example, the solid ENR matrix may be cut, shredded or ground to provide the artificial turf infill. The artificial turf infill may be then used to manufacture an artificial turf as it is illustrated in figure 3.

In other embodiments, the cured ENR mixture is granulated and mixed with a binder, e.g., a PU-based binder, to form a shock-pad, an elastic support layer, a running track layer, a playground layer, or other type of sports-floor component.

In still other embodiments, the curing process may be performed within a form having a predefined shape, or the already cured mixture may be cut or otherwise processed to adapt the predefined shape, and the cured mixture having the desired shape may then directly be used as the sports floor component, e.g., a support mat or shock pad, or may be combined with (e.g., glued to) other materials or layers of materials to form the sports floor.

The uniform distribution of the lignin within the matrix formed by the cross-linked ENR ensures an approximately homogeneous distribution of the lignin in the granulate and on the surface.

The method may optionally include manufacturing and/or installing a sports floor comprising the sports floor component, wherein the method involves combining the cured sports floor component with other components to create the sports floor. For instance, the cured sports floor component can be used as infill, which is added to an already installed artificial turf system, thereby forming an artificial turf 300 as illustrated in Figure 3. The rubber-lignin-based infill can also be mixed and/or combined with other types of infill, such as sand or plant-based infill materials, including olive pit particles, cork, hemp, rice hulls, or similar materials.

In a further optional step, the surface of the cured mixture receives a surface treatment with a waxy coating. A wax is applied as a protective barrier to improve UV and ozone resistance. The waxy layer can be sprayed, brushed, or automatically formed if wax was included in the composition.

Tensile measurements were performed using a Zwick 1456 tensile tester (ZwickRoell GmbH, Ulm, Germany). Different types of sports floor components have different requirements or optima for the tensile strength. By adapting the curing time, the degree of cross-linking and hence the degree of tensile strength can be adapted to the requirements of the individual type of sports floor component.

In order to test the effect of destabilizing the reversible ENR network in a controlled manner, various samples of a support mat were manufactured based on the above-specified manufacturing process using DMI and dodecanoic acid and lignin as filler. The support mats were allowed to cool after the curing process and the tensile strength was measured. Then, the support mats were heated to 120 °C in an oven for 20 minutes. Then, within 2 minutes after this heat treatment, when the material was still hotter than 90 °C, the tensile strength was measured a second time. It was observed that the heating had reduced the tensile strength significantly, typically in a range of 35 % - 90 % compared to the values obtained in the initial measurement. In this state, the material was particularly susceptible to induced breakage and decay induced by mechanical shear forces, and it was also less rigid and hence could be reshaped more easily, which may be beneficial in the context of installation and de-installation. Then, the material was allowed to cool to room temperature. After 3 hours at room temperature, the tensile strength was measured a third time. It was observed that the material significantly increased its tensile strength, but a full recovery was not observed. The mixture is preferably free of a sulphur or similar vulcanization agents as these agents would generate ENR molecule networks whose properties are dominated by irreversible covalent cross-links.

Figure 2 illustrates a sports floor component in the form of infill 200. Artificial turf infill is a granular material used to fill the space between the fibers of artificial turf systems, providing support, cushioning, and stability. Infill enhances the performance and safety of the turf by improving shock absorption, reducing wear, and mimicking the feel of natural grass. Common applications include sports fields, playgrounds, and landscaping.

Figure 3 illustrates artificial turf 300 comprising the infill 200 shown in figure 2. The infill 200 may be the only infill of the turf. In other embodiments, it is combined with one or more other infill types such as plant-based infill material made e.g. from wood, cork, olive pits, hemp, sisal, or zeolite-based infill, or sand. The combination of two or more infill materials may be a mixture of infill granules of different types, or may have a layered structure. For example, sand can be used as a stabilizing layer and the natural rubber-lignin based infill could be used as performance infill layer placed on top of the stabilizing layer.

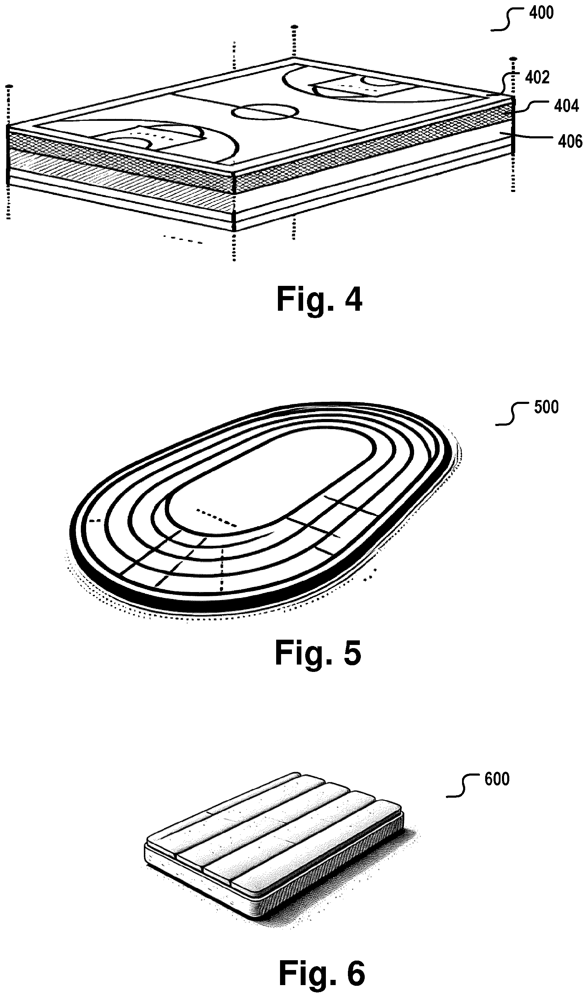

Figure 4 illustrates a sports floor component configured as a support layer 406 within a sports floor system 400. The sports floor system 400 can be, for example, a soccer or handball field. The system 400 may comprise multiple layers:

The playing surface layer 402 provides the primary interface for athletes, ensuring grip, comfort, and durability. Depending on the required performance characteristics, such as shock absorption, ball bounce, and wear resistance, the materials of the playing surface layer may be, for example, polyurethane or acrylic coating (e.g. for indoor courts such as basketball or badminton), synthetic turf or rubber for landscaping, playgrounds or multi-sport surfaces.

The support Layer 404 may have the function of a shock absorption layer. It absorbs and distributes impacts, reduces stress on athletes' joints and muscles, and enhances the lifespan of the top layer.

The support layer 404 and/or the playing surface layer 402 may be made of a rubber matrix comprising lignin a filler. For example, the matrix can be a reversibly cross-linked ENR matrix, or an irreversibly cross-linked, in particular vulcanized, rubber, NR or ENR matrix.

The base layer 406, also referred to as foundation, ensures a level, firm surface to support the upper layers. It is commonly made of concrete or asphalt for outdoor applications, or engineered plywood or particleboard for indoor sports floorings.

Figure 5 illustrates a sports floor in the form of a running track 500. The topmost layer, the running surface layer, and/or a support layer below this topmost layer, may be made of a reversibly covalently cross-linked ENR matrix comprising a filler. As mentioned with respect to figure 4, for layers of the running track which are not visible, the colour of the filler is irrelevant. Hence, for the support layer of the running track, bright fillers (e.g. chalk or kaolin) and dark fillers (e.g. lignin) may be used. However, for the visible surface layer of the running track, a bright infill is typically preferred to ensure that the colour of the filler does not alter or darken the intended colour of the running track.

Figure 6 illustrates a sports floor in the form of a shock pad 600. A shock pad as used herein is a cushioning layer or cushioning tile installed beneath the surface material (e.g., artificial turf, rubber tiles, or synthetic flooring) or used as the topmost surface layer. In the latter case, a shock pad is often also referred to as impact protection layer and used e.g. for playgrounds. Its primary function is to absorb impact, enhance safety by reducing the risk of injuries from falls, and improve surface performance by providing shock absorption, energy return, and uniform support. A shock pad may be made completely or partially from the reversibly cross-linked ENR further comprising lignin as filler. Optionally, it may comprise additional materials like foam, cork, or composites and are designed to meet specific safety and performance standards for sports applications, including recreational applications. The additional materials may be co-extruded or glued or otherwise attached to the cured rubber matrix.

It should be noted that in addition to the reversible ionic cross-links, also some covalent and irreversible cross-links between the ENR molecules may have formed for the embodiments and examples described herein. A high amount of the imidazole or imidazole derivate tends to increase the share of the reversible cross-links.

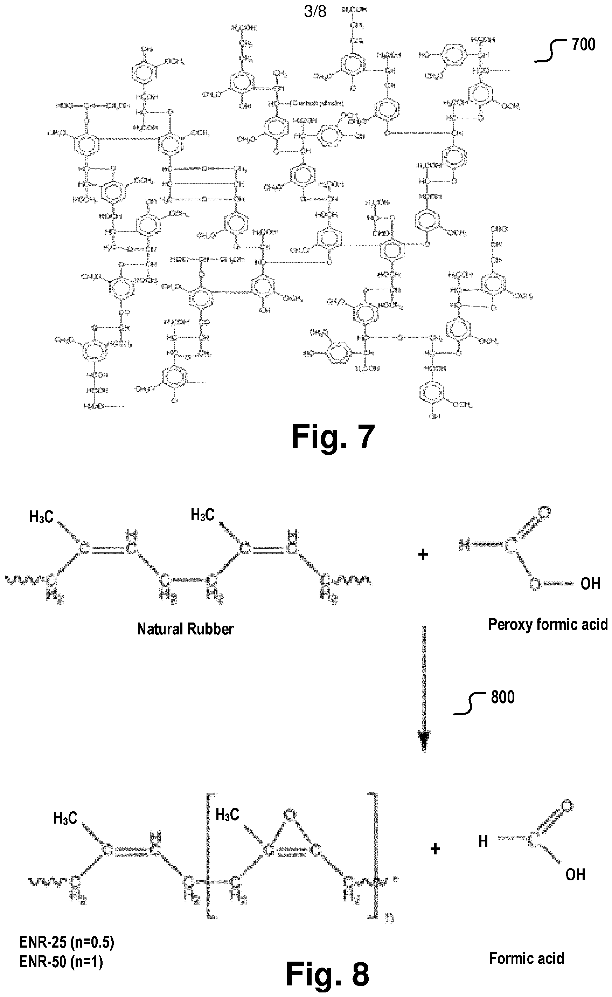

Figure 7 illustrates the structure of lignin from a softwood. As can be inferred from the figure, Lignin is a complex, amorphous biopolymer composed of phenylpropanoid units, linked by various chemical bonds, including ether (C-O-C) and carbon-carbon (C-C) linkages. Its irregular, highly branched structure contains abundant aromatic rings and hydroxyl groups, which contribute to its rigidity and thermal stability. Additionally, lignin's complex, high-molecular-weight structure improves thermal stability and its inherent antioxidant properties protect the NR (or ENR) from oxidative degradation.

Figure 8 illustrates the epoxidation reaction of natural rubber. All examples described herein may be made with epoxidized natural rubber (ENR) instead of natural rubber.

The epoxidation reaction of natural rubber involves introducing an oxygen atom to the double bonds of natural rubber (cis-1,4-polyisoprene).

This chemical reaction produces an oxirane or epoxide compound that consists of a three-membered ether in a cyclic form. For example, ENR 25 (25 mole% epoxide) and/or ENR 50 (50 mole% epoxide), which are commercially available, can be used as the epoxidized natural rubber before it is further processed (e.g., mixed with the imidazole or imidazole derivate and optionally other substances and cured).

As illustrated in figure 8, an organic peracid (e.g., peroxy formic acid or peracetic acid) is mixed with natural rubber. Peracids react with the double bonds in the polyisoprene chain, forming three-membered epoxide rings at the site of the double bond. This induces a replacement of double bonds in the polyisoprene chains by epoxide groups. Acidic or basic catalysts (e.g., sulfuric acid or ion-exchange resins) are preferably used to control the reaction.

Epoxidized natural rubber may provide the advantage of increased resistance of the resulting natural rubber-based sports floor component against many kinds of chemicals (oils, oxidants, free radicals, ozone) both because of chemical and physical aspects: the epoxidized natural rubber has an increased chemical resistance to said substances. In addition, epoxidized rubber exhibits lower permeability to gases, thereby preventing the contact with ozone, free radicals and other gaseous substances which might react with the rubber molecules and induce a decay of the rubber material.

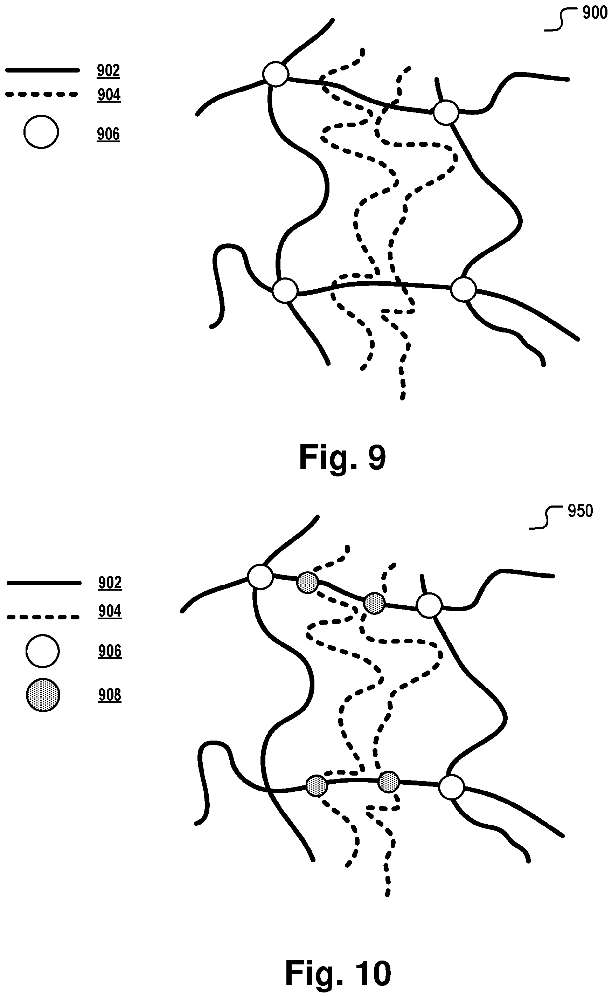

Figure 9 illustrates a matrix 900 of cross-linked ENR molecules 902. Figure 9 also shows a filler molecule 904, in this case, a lignin molecule. The lines 902 may represent the polyisoprene backbone of ENR. In an imidazole-mediated reaction, reversible ionic cross-links and also some covalent cross-links are formed between different ENR chains. The result of the cross-linking reaction is the three-dimensional matrix depicted in figure 9, where multiple different ENR chains 902 are reversibly and sometimes also irreversibly interconnected, forming a highly elastic network.

Figure 10 illustrates a matrix 950 of cross-linked ENR molecules 902 which are in addition cross-linked with the filler (here: lignin) molecules 904. The rubber-lignin cross-links are mainly hydrogen bonds, wherein in some examples, also covalent cross-links form between the rubber and the lignin, thereby further increasing the robustness of the resulting cross-linked material against heat, UV-light and other stressors. Hence, the figures 9 and 10 merely serve to illustrate that the cross-linking reaction will create additional cross-links at least between the ENR polymer chains, and optionally also to the lignin molecules (in particular when lignin in combination with a silane coupling agent is used as filler or as components of the filler).

According to some embodiments, e.g. the embodiment depicted in figure 10, the reaction parameters are chosen such that a particularly high cross-link density is reached. This results in greater robustness against degradation, and in increased rigidity. For example, a polyfunctional carboxylic acid may be added to the reaction mixture, which synergistically enhances the cross-linking effectiveness of the imidazole or imidazole derivate.

During the imidazole-mediated cross-linking reaction, reversible cross-links in the form of hydrogen bonds may also be formed between lignin and ENR. The presence of these additional ENR-lignin cross-links 908 leads to improved interfacial adhesion, which reinforces the ENR matrix.

Rubbers have an optimum range of cross-link density for their practical usage. The cross-link level has to be high enough to prevent fracture due to viscous flow but low enough to avoid brittleness. The degree and type of cross-links depend on the type and amount of the imidazole(derivate(s)) used, and on the type and amount of the optional polyfunctional carboxylic acid.

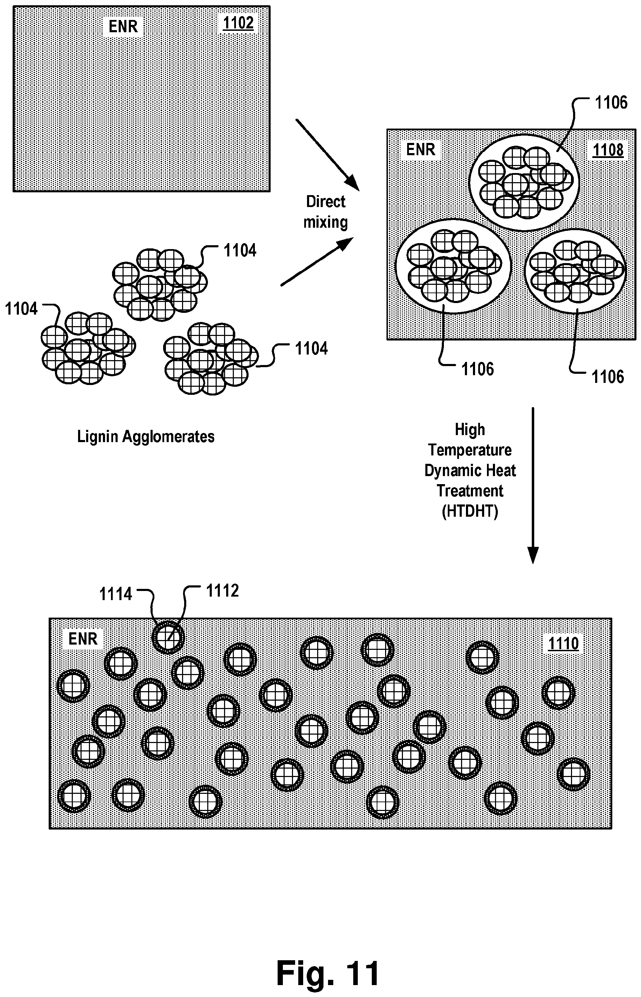

Figure 11 illustrates a high temperature dynamic heat treatment (HTDHT) procedure applied on an ENR-lignin mixture.

Lignin is a macromolecule with a strong tendency to form lignin-agglomerates 1104 when lignin is mixed with other substances. For example, when lignin is mixed with ENR, a mixture 1108 of ENR and lignin agglomerates may be formed. In this mixture 1108, which may also be referred to as "initial mixture", the contact interface between the lignin agglomerates 1104 and the ENR mass is small, because the agglomerates are comprised in cavities 1106. However, the small amount of contact interface area is a strong obstacle for the formation of cross-links between the lignin and the ENR molecules. However, these cross-links are important for the ability of lignin to protect the ENR from sunlight, oxidants, ozone, radicals and other harmful factors, as these cross-links stabilize the overall structures of the NER elastomeric matrix.

The inventors observed that by subjecting the mixture 1108 to a High-Temperature Dynamic Heat Treatment (HTDHT), lignin can be efficiently dispersed into the ENR matrix. Thereby, the lignin agglomerates are dissolved into smaller aggregates or individual molecules, and the contact surface between the lignin and the ENR is strongly increased. This is illustrated in figure 11 via the mixture 1110 which is obtained by subjecting the mixture 1106 to the HTDHT treatment: the individual lignin molecules or small lignin agglomerates 1112 are homogeneously dispersed in the ENR matrix, whereby the contact interface 1114 between lignin and rubber is greatly increased and the volume of the cavities is greatly reduced. As a result, the number of cross-links between the lignin and the ENR, which can be generated through an imidazole- or imidazole-derivative-mediated cross-linking reaction, may be significantly increased..

Applying the HTDHT on the mixture 1108 of lignin and ENR may comprise heating the mixture to a temperature of 150 °C to 200 °C while the mixture is constantly mixed. The mixing is preferably performed using high-shear mixing equipment, such as a Banbury mixer, two-roll mill, or an internal mixer. The high mechanical shear ensures uniform dispersion of lignin in the rubber matrix. Optionally, moderate pressure is applied, to enhance mixing efficiency. The mixing time is preferably in the range of 5 to 15 minutes, depending on the material viscosity and desired dispersion level. Prolonged mixing may improve the dispersion, but can lead to overheating or degradation.

According to one example, a mixing speed in a Banbury mixer of 50-100 rpm or higher is applied. Higher speeds improve dispersion but may require cooling to prevent excessive heat buildup.

According to some embodiments, the lignin is pre-processed to reduce the size of the agglomerates. For example, the lignin may be ground into fine powder, chemically modified, and/or mixed with a plasticizer, in particular oil, to enhance compatibility with the rubber matrix.

The HTDHT treatment was observed to promote dispersion of lignin in the rubber matrix and to increase the interfacial surface between lignin and rubber, thereby improving mechanical properties and thermal stability of the resulting product.

According to one example, the mixture 1110, after the HTDHT treatment is completed, is provided as the mixture generated in step 102 of the method illustrated in figure 1. The mixture 1110 may be mixed with further additives and with imidazole or imidazole derivates to induce the curing reaction of step 106.

Figure 12 illustrates a network 1200 comprising reversibly and irreversibly cross-linked ENR molecules, where the cross-links are induced by dimethylimidazole 1202 and a polyfunctional carboxylic acid 1206. As detailed above, imidazole or its derivatives, particularly dimethylimidazole, can react through both of its nitrogen atoms with separate ENR molecules, forming covalent bonds that cross-link the molecules (e.g., see molecule 1400 in Figure 14). Additionally, some imidazole or imidazole derivative molecules may react through only one of their nitrogen atoms with an ENR molecule, resulting in an ENR molecule containing an imidazolium group 1204. The imidazolium group is positively polarized or charged, facilitating the formation of reversible ionic bonds with negatively polarized or charged carboxylic anions present in the polyfunctional carboxylic acid 1206, which is also added to the mixture. These ionic bonds form a reversibly cross-linked ENR-network 1200.

Fig. 13 illustrates ester cross-links between ENR molecules and a carboxylic acid molecule and an ether cross-link between different ENR molecules. When ENR reacts with a dicarboxylic acid and dimethylimidazole, three different networks may be generated: an ionic network 1200, 1408 illustrated in figures 13A and 14; a β-hydroxy ester 1302 illustrated in figure 13B; and an ether linkage 1300 directly connecting two ENR molecules as illustrated in figure 13A.

Figure 14 is an illustration of a further type of reversible ionic ENR molecule cross-linking. The reversibility of the ionic cross-links allows to exert control on the ENR network structure even after the sports floor component was manufactured, e.g., for temporarily destabilizing the network and increasing material flexibility or the susceptibility of the material for decay during installation, maintenance, de-installation or recycling.

1H-imidazole 1404 comprises reactive 1 and 3 nitrogen atoms which will react with the oxirane ring of ENR at higher temperatures ("curing step"), leading to an ENR-molecule network 1400 comprising a positively charged imidazole 1404 covalently linked to ENR molecules 1402 as illustrated in the upper part of figure 14. In addition to the covalent cross-links, a higher-order ENR network 1408 forms reversibly based on ionic cross-links (and hydrogen bonds, not shown). For example, multiple positively charged imidazole groups and anions, e.g., alkoxide counter-anions, will form ionic clusters. Some ENR molecules will be covalently bound to the imidazole groups in the cluster while other ENR molecules will be reversibly ionically linked to positive or negative ions comprised in this cluster, thereby reversibly forming a higher-order ENR molecule network.

The inventors have observed that the network structure 1408 may be further strengthened by using lignin as filler, because the polar groups of lignin reversibly form hydrogen bonds with the rubber molecules and the ionic clusters. This may on the one hand prevent the filler from leaving the rubber matrix during use of the sports floor, and it may also ease the degradation of the sports floor component at the end of its lifetime: the controlled and induced destruction of the reversible cross-links may mechanically destabilize the ENR-lignin composition, thereby easing the degradation of the ENR matrix. For example, it will become easier for water and microbes comprised therein to penetrate the ENR matrix if the matrix is less tightly bound to the filler after the destruction of the reversible bonds. As lignin is an organic, biodegradable filler, the controlled and induced destruction of the reversible cross-links will also accelerate the biodegradation of the organic filler. This may be highly useful for controlled induction of biodegradation of the sports floor component or parts thereof at the end-of-life of the sports floor.

Due to the non-neutralization of the positive charge in the imidazolium cation, it is possible for the imidazolium cation and the alkoxide anion to form ionic pairs and then form ionic clusters initially. Furthermore, the opening of the oxirane ring results in the formation of a hydroxyl group. These hydroxyl groups can form hydrogen bonds to ENR molecules.

Applicant assumes that the network 1408 that is reversibly formed can be broken down e.g. by applying heat, but can automatically regenerate presumably because the ionic groups can diffuse and reorientate freely in the ENR matrix, resulting in the new formation of clusters and the new formation of the higher-order network 1408.

By mixing and curing ENR with an imidazole derivate and a polyfunctional carboxylic acid, typically a mixture of different reversible and irreversible cross-links such as those illustrated in figures 12-14 is formed. The share of each type of cross-links may depend on the type of imidazole derivate used, on the curing temperature and duration, and on the type and length of the polyfunctional carboxylic acid. However, assuming that no conventional cross-linker like sulphur is present in the reaction mixture, the physical properties of the resulting sports floor components will be determined both by the irreversible cross-links and by the reversible cross-links, giving the product both mechanical robustness and the ability to allow a controlled degradation or temporal weakening of the network.

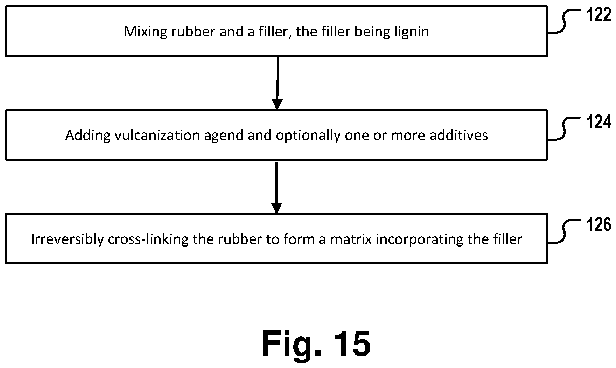

Figure 15 is a flow chart of a method of manufacturing a sports floor component made of irreversibly covalently cross-linked rubber comprising lignin as a filler. The lignin can be, for example, kraft lignin.

The rubber may be petro-based rubber, or NR, or ENR. The NR may be provided, for example, as raw natural rubber. Raw natural rubber is commercially available e.g. in sheet or latex form. If it is received in the liquid latex form, the natural rubber is dried to achieve a consistent starting material. Alternatively, the rubber may be ENR, or a pre-processed and/or functionalized NR.

Optionally, lignin may be combined with a further filler, e.g., silica, and/or a plasticizer, e.g., a mineral oil or, preferably, a plant-based oil. If the lignin is combined with a plasticizer, the lignin-plasticizer mixture is preferably milled to ease the dispersion of the lignin in the rubber matrix.

In step 122, lignin is mixed with the rubber to form a composition that may also be referred to as "rubber composition", "rubber composite", "reaction mixture" or "mixture".

The mixture is thoroughly mixed until all components are homogeneously dispersed. For example, a two-roll mill or internal mixer (e.g., Banbury mixer) can be used to mix the components. Preferably, the filler is added gradually and in powder form into the rubber to ensure uniform dispersion to avoid clumping and ensure effective reinforcement.

Next in step 124, a vulcanizing agent and one or more optional additives are added to the composition. The vulcanisation agent, accelerators, stabilizers, and other additives may be incorporated into the composition while maintaining continuous mixing to ensure uniform dispersion and achieve a homogeneous composition.

The steps 124 and 124 may also be executed simultaneously, meaning that all components of the composition may be added simultaneously. The optional additives may comprise, for example, UV-protection agents, antioxidants, pigments, anti-ozone agents, or combinations thereof. For example, in step 124, the vulcanization agent sulphur, accelerators (e.g., thiazoles or sulfenamides), and/or activators (e.g., zinc oxide and stearic acid) may be added to the composition.

For example, the composition finally used as reaction mixture to introduce the irreversible covalent bonds between rubber polymer chains may comprise 20-50 % by weight the rubber, and 50-70% by weight the filler (predominantly or exclusively lignin). The rest of the composition may consist of additives like vulcanizing agents, plasticizers, pigments, UV-protecting agents, anti-ozone agents, etc. Hence, the sports floor component according to embodiments of the invention which is made of the cross-linked rubber and the filler will comprise 20-50 % by weight the cross-linked rubber, and 50-70% filler by weight.

According to some embodiments, the vulcanization agent, e.g., sulphur, is preferably added to the composition in amounts ranging from 0.4 to 3.5 (weight) parts per hundred rubber (phr), wherein the "rubber" refers to the amount of petro-based rubber, NR or ENR in the composition. The exact amount used depends on the desired properties of the final product and the specific vulcanization method.

In some embodiments, the sulphur is added in amounts ranging from 0.4 to < 2.0 phr, in particular 0.4 to 0.8 phr. The reduced amount of vulcanization agent was observed to be associated with improved heat aging resistance.

According to some embodiments, the rubber-filler composition is a vulcanization reaction mixture comprising sulphur as the vulcanization agent. The mixture has a sulphur content of between 0.4 to 0.8 phr. According to some embodiments, the accelerator and the vulcanization agent are added in a weight ratio of the accelerator: vulcanization agent of less than 12.0:1.0, in particular 2.5:1.0 to 12.0:1.0. The reduced amount of sulphur, and in particular the above-specified accelerator:vulcanization agent ratio, can help improve thermal aging resistance and reduce stress relaxation. The reduced amount of sulphur, and in particular the above-specified accelerator:vulcanization agent ratio, are particularly beneficial if NR or ENR is used as these types of rubbers are particularly susceptible for thermal or UV-induced aging. In combination of a lignin-based filler, the above-mentioned sulphur amount and amount ratio may help providing a sports floor component that is characterized by a particularly high stability with respect to thermal, UV-light associated and oxidative stress, even in case NR or ENR is used.

In a further, optional step, the composition may be brought into a desired shape before the composition vulcanizes. For example, the composition can be passed through a two-roll mill or an extruder to form sheets of desired thickness. For specific applications (e.g., some types of shock pads), the composition may be molded into shapes using compression or injection molding.

Next in step 126, the rubber-lignin composition comprising the vulcanisation agent and optionally further additives is vulcanized. Thereby, irreversible covalent cross-links are formed between the rubber molecules, and the filler is trapped within the elastomeric matrix of cross-linked rubber molecules. In particular, when sulphur is used as vulcanizing agent, the sulphur atoms (S-S) form covalent cross-links between the double bonds of adjacent polyisoprene chains of the rubber.

For example, the composition may be placed into a plate vulcanizer and compressed. Alternatively, the composition may be processed through an extruder that simultaneously vulcanizes the material during extrusion. In certain embodiments, vulcanization involves placing sheets of the composition or molded forms thereof into a vulcanization press. The press is preheated to the required curing temperature, typically between 140°C and 160°C. Vulcanization is achieved by applying heat and pressure to the material for a curing period ranging from 10 to 30 minutes, depending on the material's thickness and formulation.

According to preferred embodiments, the vulcanization process is an autoclave vulcanization process, i.e., a vulcanization reaction executed in an autoclave. In the autoclave, a composition comprising at least the rubber, the filler, the vulcanization agent, and one or more optional additives such as vulcanization accelerators, pigments, UV protection agents etc. is exposed to saturated steam under pressure. These conditions induce the formation of the cross-links and the rubber is "vulcanized" or "cured". The saturated steam acts as an inert gas, facilitating better heat transfer and allowing for lower curing temperatures and shorter cure times compared to traditional methods.

The applicant has observed that autoclave vulcanization is particularly advantageous for vulcanizing rubber for sports floor components, because the shorter cure times allows for lower temperatures and hence allows to reduce the overall heat exposure time to minimize any potential damage to the NR and ENR. As mentioned above, NR is more sensitive to heat and other stressors than many petro-based rubber like EPDM. The pressure for curing the rubber, in particular NR or ENR, in an autoclave is around 0.3 to 0.7 MPa (approximately 43.5 to 101.5 psi). The curing temperature in the autoclave may range, for example, from 140°C to 200°C, in particular 140°C to 160°C, with cure times varying based on the thickness and type of the rubber composition. For sections thicker than 10 mm, preferably a time cycle of 15 to 90 minutes is used. The increased pressure in the autoclave may allow to reduce porosity in the final product, which increases the robustness of the product against decay. Furthermore, the closed environment of an autoclave allows for a better control and mitigation of oxidation processes, which may occur when peroxide is used as a curing agent. According to some examples, the autoclave is filled and operated using an inert gas such as nitrogen, thereby increasing and preserving the quality of the product.

During vulcanization, sulphur and accelerators form covalent cross-links within the rubber matrix, integrating the filler into the network. After the vulcanization, the vulcanized rubber is removed from the press and is allowed to cool to room temperature.

The vulcanized rubber-filler composition is a solid and typically elastic material that is much more robust against UV, oxidative stress, or ozone than the non-vulcanized rubber, particularly raw/non-vulcanized NR or ENR.

As lignin is used as a filler, the vulcanized composition is also significantly more robust against the aforementioned environmental conditions compared to vulcanized rubber without a filler or with a non-lignin filler, especially when the rubber is NR or ENR.

In order to complete manufacturing of the sports floor component, additional steps may be executed depending on the type of the component. For example, if the sports floor component to be manufactured is artificial turf infill, the vulcanized composition is granulated. For example, the solid vulcanized rubber composition may be cut, shredded or ground to provide the artificial turf infill. The artificial turf infill may be then used to manufacture an artificial turf as it is illustrated in figure 3.

In other embodiments, the vulcanized rubber composition is granulated and mixed with a binder, e.g., a PU-based binder, to form a shock-pad, an elastic support layer, a running track layer, a playground layer, or other type of sports-floor component.

In still other embodiments, the vulcanization process may be performed within a form having a predefined shape, or the already vulcanized composition may be cut or otherwise processed to adapt the predefined shape, and the vulcanized composition having the desired shape may then directly be used as the sports floor component, e.g., a support mat or shock pad, or may be combined with (e.g., glued to) other materials or layers of materials to form the sports floor.

The granulate and its surface typically consists of both filler components and cross-linked rubber. The uniform distribution of the filler within the matrix formed by the cross-linked rubber ensures an approximately homogeneous distribution of the filler in the granulate and on the surface.

The method may optionally include manufacturing and/or installing a sports floor comprising the sports floor component, wherein the method involves combining the vulcanized sports floor component with other components to create the sports floor. For instance, the vulcanized sports floor component can be used as infill, which is added to an already installed artificial turf system, thereby forming an artificial turf 300 as illustrated in Figure 3. The rubber-filler-based infill can also be mixed and/or combined with other types of infill, such as sand or plant-based infill materials, including olive pit particles, cork, hemp, or similar materials.

In a further optional step, the surface of the vulcanized rubber composition receives a surface treatment with a waxy coating. A wax is applied as a protective barrier to improve UV and ozone resistance. The waxy layer can be sprayed, brushed, or automatically formed if wax was included in the composition.

The term "vulcanization" as used herein is a chemical process that induces the formation of covalent cross-links in rubber by heating it with a vulcanisation agent, e.g., sulphur. The vulcanisation is typically performed under pressure.

A "natural rubber" as used herein refers to a polymer derived from the latex of rubber trees, e.g., Hevea brasiliensis, composed mainly of cis-1,4-polyisoprene. The natural rubber may be a functionalized or non-functionalized form of natural rubber. For example, the natural rubber can be raw natural rubber, or hydrogenated or functionalized natural rubber. If the natural rubber is epoxidized, it is referred to as ENR.

A "cross-link" as used herein is a covalent or non-covalent bond that joins two or more polymer chains together, forming a three-dimensional network. Cross-links can be covalent (e.g., ester bonds) or non-covalent (e.g., ionic or hydrogen bonds). Cross-links may enhance the material's mechanical properties, such as elasticity, tensile strength, and resistance to deformation, while also improving durability and thermal stability.

A "sports floor" as used herein refers to a surface designed to support athletic and recreational activities, in particular by providing durability, safety, and performance in accordance with the requirements of the respective application. It includes a range of systems such as artificial turf, rubber tiles, hardwood courts, and synthetic surfaces used in sports fields, indoor courts, and playgrounds. In the context of playgrounds, sports flooring also prioritizes impact absorption and safety to minimize injuries from falls while maintaining durability and weather resistance for outdoor environments.

While the invention has been illustrated and described in detail in the drawings and foregoing description, such illustration and description are to be considered illustrative or exemplary and not restrictive. The invention is not limited to the disclosed examples. In particular, features and examples described with respect to the irreversible cross-linking approach using vulcanization agents can be combined with features and examples described with respect to the reversible, imidazole-mediated cross-linking approach and vice versa, unless the respective features and examples are mutually exclusive.

Examples of manufacturing methods and sports floor components are described in the following clauses:
1. A method of manufacturing a sports floor component (200, 404, 500, 600), comprising:
   - mixing (102) rubber (1102) and lignin to provide a rubber composition;
   - curing (106) the rubber composition to form a matrix (1200, 1408) of cross-linked rubber molecules (1402) incorporating the lignin.
2. The method of clause 1, wherein the lignin is Kraft Lignin.
3. The method of any one of the previous clauses, wherein the lignin is added as a filler, in particular in an amount of 50-70% by weight the rubber composition.
4. The method of any one of the previous clauses, wherein the rubber is selected from a group comprising: petro-based rubber, natural rubber, epoxidized natural rubber, or a mixture thereof.

### Method using reversible cross-linking

5. The method of any one of the previous clauses, wherein the rubber is epoxidized natural rubber and wherein the mixing comprises mixing the rubber and the lignin with imidazole or an imidazole derivate, and wherein the rubber composition is cured such that the matrix comprises reversible cross-links between different ENR molecules and between ENR and lignin molecules.
6. The method of clause 5, wherein the imidazole derivate is an alkyl-substituted derivate of imidazole, in particular a dialkyl-substituted derivate of imidazole, wherein the alkyl has a chain length shorter than 5 carbon atoms.
7. The method of any one of the previous clauses 5-6, wherein the imidazole derivate is a dimethyl-substituted derivative of imidazole, in particular 1,2-dimethyl imidazole.
8. The method of any one of the previous clauses 5-7, wherein the mixing comprises mixing the ENR, the lignin and the imidazole or imidazole derivate with a polyfunctional carboxylic acid (1206).
9. The method of clause 8, wherein the polyfunctional carboxylic acid is a dicarboxylic acid.
10. The method of any one of clauses 8-9, wherein the polyfunctional carboxylic acid has a chain length from 2 to 15 carbon atoms, in particular from 2 to 12 carbon atoms.
11. The method of any one of clauses 8-10, wherein the polyfunctional carboxylic acid is selected from a group comprising: oxalic acid, malonic acid, succinic acid, glutaric acid, adipic acid, pimelic acid, sebacic acid, and dodecanedioic acid or sebacic acid.
12. The method of any one of clauses 8-11, wherein the polyfunctional carboxylic acid is dodecanedioic acid.
13. The method of any one of clauses 8-12, wherein the polyfunctional carboxylic acid is a reaction product between an epoxidized vegetable oil and a plant-based polyfunctional carboxylic acid.
14. The method of clause 13,
   - wherein the epoxidized vegetable oil is an epoxidized derivative of a vegetable oil selected from a group comprising: soybean oil, linseed oil, palm oil, com oil, cottonseed oil, castor oil, canola oil, rapeseed oil, tung oil, grape seed oil, peanut oil, poppy seed oil, epoxidized tongue oil, sunflower oil, safflower oil, wheat germ oil, walnut oil; and/or
   - wherein the plant-based polyfunctional carboxylic acid is selected from a group comprising: citric acid, oxalic acid, glutaric acid, tartaric acid, succinic acid, adipic acid, malic acid, maleic acid, and fumaric acid.
15. The method of any one of clauses 8-14, wherein the imidazole or imidazole derivate, IMI, and the polyfunctional carboxylic acid, A, are mixed in a molar ratio IMI:A of < 1.5:1.0,in particular of <1.2:1.0, in particular of ≤ 1.0:1.0, in particular a molar ratio IMI:A of 1:3 to 2:3, in particular in a molar ratio of 0.4:1.0 to 0.6:1.0.
16. The method of any one of the previous clauses 5-15, wherein the mixing comprises mixing the ENR, the lignin and the imidazole or imidazole derivate with one or more additives selected from the group comprising UV-protectants, antioxidants, and anti-ozone agents or combinations thereof.
17. The method of any one of the previous clauses 5-16,
   - wherein the mixing (102) is performed at a temperature above 100 °C, in particular at a temperature of 100 °C to 140 °C, in particular at a temperature of 100 °C to 120 °C;
   - wherein the curing (106) is performed at a temperature of 150 °C-200 °C, in particular of 150 °C-180 °C.
18. The method of any one of the previous clauses 5-17, wherein the curing is performed at a temperature of 150 °C-180 °C, in particular of 160 °C-170 °C.
19. The method of any one of the previous clauses 4-18, wherein the rubber is ENR and wherein the ENR has a mole degree of epoxidation of between 20% and 60%, in particular between 40% and 60%.
20. The method of any one of the previous clauses 5-19, wherein the lignin is added as a first filler and wherein the mixing comprises adding to the rubber composition a second filler selected from a group comprising:
   - an inorganic filler, in particular an inorganic filler selected from a group comprising: Chalk; Silica (Quartz Sand); Calcium Silicate; Barium Sulfate; Clay or Kaolin; Aluminum Hydroxide; Magnesium Hydroxide; Zinc Oxide; Fly Ash; Talc; Wollastonite; Perlite; or
   - a recycled, plastic-based filler, or
   - an organic filler, in particular Carbon Black.
21. The method of any one of the previous clauses 5-20, wherein the method comprises:
   - mixing the ENR (1102) and the lignin to form an initial mixture (1108);
   - subjecting the initial mixture for at least 5 minutes at a temperature of 150 °C to 200 °C under continuous mixing to provide a further mixture (1110) with increased dispersion of the lignin (1114) in the ENR (1110); and
   - adding the imidazole or imidazole derivative and optionally also a polyfunctional carboxylic acid to the further mixture, and executing the mixing (102) and the curing (106) on the further mixture.
22. The method of any one of the previous clauses 5-21, further comprising: subjecting the sports-floor component to a temperature of 150 °C to 250 °C to break the reversible cross-links.

### Method using irreversible cross-linking

23. The method of any one of the previous clauses 1-4, wherein the curing of the rubber composition is performed such that a matrix of irreversibly cross-linked rubber molecules is formed and incorporates the lignin.
24. The method of clause 23, further comprising:
   - adding a vulcanization agent to facilitate the formation of cross-links between polyisoprene chains in the rubber; and/or
   - adding an accelerator of a vulcanization reaction, wherein in particular the vulcanization accelerator is selected from the group comprising of thiazoles, sulfenamides, thiurams, and dithiocarbamates.
25. The method according to any one of clauses 23-24, wherein the curing comprises heating the rubber composition to a temperature range of about 140°C to 200°C to initiate vulcanization cross-linking reactions.
26. The method according to any one of clauses 24-25,
   - wherein the vulcanization agent is sulphur,
   - wherein the vulcanization agent is added in amounts ranging from 0.4 to < 2.0 parts per 100 weight parts of the rubber, phr, in particular 0.4 to 0.8 phr.
27. The method according to any one of clauses 24-26,
   - wherein the vulcanization agent and the accelerator are added in a weight ratio of the accelerator: vulcanization agent of less than 12.0:1.0, in particular 2.5:1.0 to 12.0:1.0.

### Methods for reversible and irreversible cross-linking

28. The method according to any one of clauses, wherein the curing is performed in an autoclave; and/or wherein the method further comprises silanising the lignin or a mixture of lignin and silica using a silane coupling agent under the presence of the rubber, thereby covalently coupling the silanized lignin or the mixture of silanized lignin and silica to the rubber.
29. The method according to any one of clauses, wherein the mixing (102) of the rubber and lignin (700, 904, 1104, 1112) comprises:
   - adding one or more additives selected from the group consisting of UV-protectants, antioxidants, and anti-ozone agents to the rubber composition prior to the creation of the covalent cross-links.
30. The method according to any one of clauses, wherein the mixing (102) of the rubber and lignin (700, 904, 1104, 1112) comprises:
   - mixing the rubber (1102) and the lignin comprising lignin-agglomerates (1104) to form an initial mixture (1108);
   - subjecting the initial mixture to a high temperature dynamic heat treatment involving mixing the initial mixture for at least 5 minutes at a temperature of 150°C to 200°C to provide a further mixture (1110) with increased dispersion of the lignin (1114) in the rubber (1110); and
   - using the further mixture as the rubber composition to be cured, wherein optionally additives such as an vulcanization agent and/or an accelerator of vulcanization is added to the further mixture before the curing.

### Sports floor components

31. A sports floor component (200, 402, 404) comprising cross-linked rubber, and further comprising lignin (700, 904, 1104, 1112).

### Sports floor components obtained via reversible cross-linking

32. The sports floor component of clause 31, wherein the cross-linked rubber is reversibly cross-linked epoxidized natural rubber, ENR.
33. The sports floor component of clause 32, wherein the ENR is covalently linked to imidazolium groups and wherein the imidazolium groups of some ENR molecules act as cations forming ionic bonds to other ENR molecules.
34. The sports floor component of any one of clauses 32-33, wherein the ENR is covalently linked to imidazolium groups and wherein the imidazolium groups of different ENR molecules act as cations forming ionic bonds to negative carboxyl groups of a polyfunctional carboxylic acid.

### Sports floor components obtained via irreversible cross-linking

35. The sports floor component of clause 31, wherein the cross-linked rubber is irreversibly covalently cross-linked.
36. The sports floor component of clause 31 or 35, wherein the cross-linked rubber forms an elastomeric matrix filled with the lignin.
37. The sports floor component of any one of the previous clauses 31 or 35-36, wherein the cross-linked rubber is vulcanized rubber.
38. The sports floor component of any one of the previous clauses 31 or 35-37, wherein the covalently cross-linked rubber is a covalently cross-linked blend of natural rubber and a saturated elastomer, wherein the saturated elastomer is in particular EPDM.

### Sports floor components obtained via reversible or irreversible cross-linking

39. The sports floor component of any one of the previous clauses 31-38, wherein the sports floor component is at least one of:
   - an artificial turf infill;
   - a component, such as a layer, of a running track;
   - a component, such as a layer, of a tennis court;
   - a support mat;
   - a shock pad;
   - a combination thereof.
40. The sports floor component of any one of the previous clauses 31-39, wherein the sports floor component comprises the lignin as a first filler and further comprises a second filler selected from a group comprising:
   - an inorganic filler, in particular an inorganic filler selected from a group comprising: Chalk; Silica (Quartz Sand); Calcium Silicate; Barium Sulfate; Clay or Kaolin; Aluminum Hydroxide; Magnesium Hydroxide; Zinc Oxide; Fly Ash; Talc; Wollastonite; Perlite; or
   - a recycled, plastic-based filler, or
   - a further organic filler, in particular Carbon Black; or
   - a combination of two or more of the foregoing.

### REFERENCE SIGNS LIST

- 102-126: steps
- 200: artificial turf infill
- 300: artificial turf
- 400: sports flooring system
- 402: surface layer
- 404: support layer
- 406: base layer
- 500: running track
- 600: shock pad
- 700: lignin
- 800: epoxidation reaction
- 900: matrix of covalently cross-linked ENR molecules
- 902: ENR molecule
- 904: filler molecule
- 906: covalent bond between NR (or ENR) molecules
- 908: covalent bond between a NR (or ENR) molecule and a lignin molecule
- 950: matrix of covalently cross-linked NR (or ENR) molecules linked also to lignin
- 1102: ENR
- 1104: lignin agglomerates
- 1106: cavities
- 1108: ENR-lignin mixture obtained from direct mixing
- 1110: ENR-lignin mixture resulting from HTDHT
- 1112: lignin molecule
- 1114: contact interface lignin-molecule-EN
- 1200: ionically cross-linked ENR network
- 1202: 1, 3 dimethyl imidazole
- 1204: ENR-molecule with imidazolium group
- 1206: dicarboxylic acid
- 1300: ENR network comprising covalent ester and ether cross-links
- 1302: ENR network comprising covalent ester cross-links
- 1400: irreversibly cross-linked ENR network
- 1402: ENR molecule
- 1404: imidazolium group
- 1408: reversibly cross-linked ENR- network

## Claims

1. A method of manufacturing a sports floor component (200, 404, 500, 600), comprising:
- mixing (102) rubber (1102) and lignin to provide a rubber composition;
- curing (106) the rubber composition to form a matrix (1200, 1408) of cross-linked rubber molecules (1402) incorporating the lignin.

2. The method of claim 1,
- wherein the rubber is selected from a group comprising: petro-based rubber, natural rubber, epoxidized natural rubber, or a mixture thereof; and/or
- wherein the lignin is Kraft Lignin; and/or
- wherein the lignin is added in an amount of 50-70% by weight the rubber composition.

3. The method of any one of the previous claims, wherein the rubber is epoxidized natural rubber and wherein the mixing comprises mixing the rubber and the lignin with imidazole or an imidazole derivate, and wherein the rubber composition is cured such that the matrix comprises reversible cross-links between different ENR molecules and between ENR and lignin molecules.

4. The method of claim 3, wherein the imidazole derivate is a dimethyl-substituted derivative of imidazole, in particular 1,2-dimethyl imidazole, and/or wherein the mixing comprises mixing the ENR, the lignin and the imidazole or imidazole derivate with a polyfunctional carboxylic acid (1206).

5. The method of any one of claims 3-4, wherein the polyfunctional carboxylic acid has a chain length from 2 to 15 carbon atoms, in particular from 2 to 12 carbon atoms.

6. The method of any one of claims 3-5, wherein the imidazole or imidazole derivate, IMI, and the polyfunctional carboxylic acid, A, are mixed in a molar ratio IMI:A of < 1.5:1.0,in particular of <1.2:1.0, in particular of ≤ 1.0:1.0, in particular a molar ratio IMI:A of 1:3 to 2:3, in particular in a molar ratio of 0.4:1.0 to 0.6:1.0.

7. The method of any one of the previous claims 3-6, further comprising: subjecting the sports-floor component to a temperature of 150 °C to 250 °C to break the reversible cross-links.

8. The method of any one of claims 1-2, wherein the curing is a vulcanisation, the method further comprising:
- adding a vulcanization agent to facilitate the formation of cross-links between polyisoprene chains in the rubber;
- and optionally adding an accelerator of a vulcanization reaction.

9. The method of claim 8, wherein the vulcanization agent and the accelerator are added in a weight ratio of the accelerator: vulcanization agent of less than 12.0:1.0, in particular 2.5:1.0 to 12.0:1.0.

10. The method according to any one of claims, further comprising pre-treating the lignin, the pre-treating comprising mixing the lignin with a plasticizer, in particular an oil, and milling the lignin-plasticizer mixture, wherein the milled lignin-plasticizer mixture is used as the lignin mixed with the rubber.

11. The method according to any one of claims, further comprising:
- silanising the lignin or a mixture of lignin and silica using a silane coupling agent under the presence of the rubber, thereby covalently coupling the silanized lignin or the mixture of silanized lignin and silica to the rubber.

12. The method according to any one of claims, wherein the mixing (102) of the rubber and lignin (700, 904, 1104, 1112) comprises:
- mixing the rubber (1102) and the lignin to form an initial mixture (1108);
- mixing the initial mixture for at least 5 minutes at a temperature of 150°C to 200°C to provide a further mixture (1110) with increased dispersion of the lignin (1114) in the rubber (1110); and
- using the further mixture as the rubber composition to be cured.

13. A sports floor component (200, 402, 404) comprising cross-linked rubber, and further comprising lignin (700, 904, 1104, 1112).

14. The sports floor component of claim 13,
- wherein the cross-linked rubber is reversibly cross-linked epoxidized natural rubber, ENR, wherein the cross-links are imidazole or imidazole derivate mediated cross-links; or
- wherein the cross-linked rubber is vulcanized rubber.

15. The sports floor component of any one of claims 13-14, wherein the sports floor component is at least one of:
- an artificial turf infill;
- a component, such as a layer, of a running track;
- a component, such as a layer, of a tennis court;
- a support mat;
- a shock pad;
- a combination thereof.
